# EUROPEAN PATENT APPLICATION

(11) **EP 2 187 616 A1**
(43) Date of publication of application: **19.05.2010**
(21) Application number: 08169146.1
(22) Date of filing: 14.11.2008
(51) Int. Cl.: H04N 1/405, H04N 1/407, H04N 1/52

(54) **Image data processing for printing**

(71) Applicant: EMPA Dübendorf, 8600 Dübendorf (CH)
(72) Inventor: Simon, Klaus c/o EMPA, Medientechnik, 8600 Dübendorf (CH); Stamm, Tobias c/o EMPA, Medientechnik, 8600 Dübendorf (CH)
(74) Representative: Schwabe - Sandmair - Marx

(57) **Abstract**

The present invention relates to an mmage data processing method for processing input image data representing input colour pixels of an input colour image to be printed wherein the image data processing method uses an error diffusion process in order to produce an output binary image data which represent an output binary image which represents a processed binary version of the input colour image, process pixels are determined by the error diffusion process, which process pixels constitute a process image and which respectively have a process colour value which is the sum of the colour value of the respective input colour pixel and an error colour value propagated to the location of the respective input colour pixel by the error diffusion process, wherein the error diffusion process uses the process pixels in order to process the input colour pixels step by step in at least one pass; wherein the process pixel determined from that one of the input colour pixels which is processed in a current one of the steps is a visited pixel, characterised in that the following is performed in the current step:
a) a process pixel cell is determined which includes the visited pixel and further process pixels,
b) at least one non-fixed pixel of the process pixel cell is determined for which at least one output binary pixel is allowed to be determined by quantization, the at least one allowed output binary pixel having the same location in the output binary image as has the at least one non-fixed pixel in the process image constituted by the process pixels,
c) the process colour value of the visited pixel is compared to the colour values of candidate dot cells or values derived from these colour values, the candidate dot cells consisting of cell dots, the cell dots respectively representing cell binary values, the candidate dot cells respectively representing a candidate composition of printed binary pixels and respectively having the same size as the process pixel cell,
d) a selection of a dot cell out of the candidate dot cells is performed based on the comparison,
e) wherein a output binary value of the at least one allowed output binary pixel is determined to become equal to the cell binary value of the at least one cell dot of the selected dot cell which has the same location in the selected dot cell as has the at least one non-fixed pixel in the process pixel cell.

## Description

The present invention relates to the processing of image data to be used for printing. The processing of the image data is meant for improving the quality of the printed image.

### Background of the Invention

Printing devices are designed to reproduce images on a substrate. The smallest unit reproduced by a specific printing device is called a "dot" which usually defines the resolution of the printing device, often specified with the unit dpi (dots per inch) or 1/cm (lines per centimeter). With a sufficiently high resolution relative to the reading distance, the human visual system cannot recognize dots as single units anymore and therefore perceives the dot together with its surrounding as an integral, homogene colour arised by a seeming mixture of the light re-emitted by the underlying dots.

In a printing process, the desired colour tones are rendered by a physical simulation on the printing substrate which is known as "halftoning". This simulation is necessary as by physical restrictions the vast majority of printing devices is not capable of rendering a continuous value of area coverage (multilevel halftoning) but produce either an entirely filled dot or the dot is completely omitted (bilevel halftoning). Either way, with increasing resolution, dot arrangements can create any printable colour tone for the human visual system. Without stated otherwise, in the following, "halftoning" means "bilevel halftoning".

From a principal point of view, colours have to be understood as weighted spectra of lightwaves. Accordingly, todays printing devices commonly rely on a given, reduced set of only a few process-colours, normally characterized by its wavelength remission spectrum s(lambda). The different printing colours are treated separately in so called "channels" which declare for a specific place how much of the regarded colour must be reproduced. The most popular set is CMYK (Cyan, Magenta, Yellow, Black) where each colour is intended to be printed on a (white) reflecting substrate. Additional channels are called "spot-colours".

The colour space CMYK is optimized for the overprint of colours. The overprint of colours behaves similar like colour-filters in the sense that the involved spectra are convoluted, in other words, are multiplied componentwise. This mixture of colours is known as "subtractive". In contrast to this, the major part of colour specifications in colorimetry and image reproduction uses "additive" colour models like XYZ or RGB (Red, Green, Blue). Here, the involved spectra are added in every component. Note that, "subtractive colour model" is NOT the negation of "additive colour model". In additive colour models, a colour is specified in terms of weights of a colorimetric basis, in other words: luminances of primary colours.

A colour image in general specifies at every place a colour derived by a underlying spectrum. In digital image reproduction, the weights often are represented by discretized values like natural numbers in the range of [0,255]. As the weight denotes only a part of a full colour tone, this is called a halftone.

Halftoning is of primary significance in the graphic arts industry as nowadays every graphical input is treated entirely as an image reproduction problem. In digital image reproduction, the image is spatially discretized (sampled) into parts which are known as "pixels". Each pixel defines one colour value corresponding to the colour of the original image. To simplify this specification, we first assume to only have one grey channel resulting in a black and white image.

In case of amplitude modulation, explained below, the size of one pixel corresponds to a small area on the paper called "raster cell" which has to be so small that relative to reading distance, the cells cannot be resolved by the receptors of the retina of the human eye. Accordingly, the grey value of a raster cell follows from the mixture between the printed (black) and unprinted (white) area of paper.

Halftoning methods differ in the kind of filling the raster cell with printed or unprinted dots. Todays methods commonly assume a raster cell to be a *r*×*r* matrix whereas r stands for the number of dots that can be arranged in one dimension, and "×" indicates the cartesian product. A common printer fills this raster cell according to the input value with a fixed pattern theoretically resulting in r*r+1 different luminance values where * indicates the multiplication. The human eye resolves continuous grey values within 50-100 distinct luminance levels which leads to cell sizes with r=8 or even r=16 for 65 or 257 luminance values respectively. The filling of such a *r*×*r* cell is correlated to the term "dither matrix". Dither matrices determine a specific set of patterns which have to be placed onto the cells whereas a given matrix defines when to set a dot triggered by a thereshold value corresponding to a specific colour tone. Such methods are described in R. Ulichney: "Digital Halftoning" or R. Kang: "Digital Color Halftoning".

In printing industry, the method mentioned above is an instance of an amplitude modulated (AM) halftoning. A raster cell is regarded as an artificial, bigger cell-dot changing its diameter (amplitude) according to the number of printer-dots which are printed within the cell. The cells are placed using a systematic arrangement which supports the physical potential of todays printing devices. Cell-fillings may be arbitrary, but in todays printing, dots within one cell are usually clustered together. While this adds up to mechanical robustness, AM loses much of the detail-richness due to the big cell sizes, even if current printer resolutions go from 600 up to 2400 dpi. With this theoretical considerations, todays usual resolutions of 60 to 80 l/cm can be explained.

When extending this method to multiple channels, one has to consider the limited space within a raster cell. As the raster cell is assumed to be small, only a limited number of distinct colours fit in, which makes it hard to incorporate several colours. The different channels traditionally and physically are treated separately and are over-printed sequentially. As AM produces regular, repetitive structures (often is denoted as the "raster"), overprints must theoretically be aligned perfectly, otherwise inevitably, a disturbing effect called moiré-patterns arises. As todays printing devices cannot reproduce a perfect overlapping, the channels cannot be aligned without some moiré-effects. Nevertheless, this effect can be reduced by using different raster-angles for the different channels (screens) resulting in minimal moiré-patterns.

The overlapping of separate channels under different angles causes the dots of the different channels to be more or less randomly overlapped, which introduces an unwanted subtractive mixture of the colour tones. As the actual overlappings of the colour dots is commonly not known exactly, this introduces an uncertainty in the reproduced and therefore in the perceived colour tone.

In contrast to AM, where colour tones are reproduced cell-by-cell, frequency modulated halftoning (FM) is able to use the maximal available resolution of a printer by approaching the colour tone dot-by-dot. When using FM, the original picture is preferably considered to be available in the maximum printer resolution so that every pixel corresponds to one dot. The dot structure is determined by a dot-wise quantization process in combination with the propagation of the resulting quantization error using the well known error-diffusion technique (see D. E. Knuth: "Digital Halftones by Dot Diffusion"). Finally, we may have some additional local or global optimization steps like using cluster-detection (for example R. Ulichney: "The void-and-cluster method for dither array generation"). The invention to be described later preferably uses FM-processes like dot-wise quantization and error propagation.

Traditional FM considers a non-visited pixel and decides according to the intended tone whether to set or not set a dot. The order of when to visit a specific pixel is arbitrary and several methods exist to visit all pixels of an image. The resulting difference in one pixel to the desired value is propagated to the neighbouring, non-visited pixels in an arbitrary way whereas also for this propagation step several methods exist. By propagating the error to the unvisited pixels, the overall error of the whole image tendentially sums up to 0 which sometimes is referred to as "conservation of energy". The most common method for traditional FM-halftoning is Floyd-Steinberg.

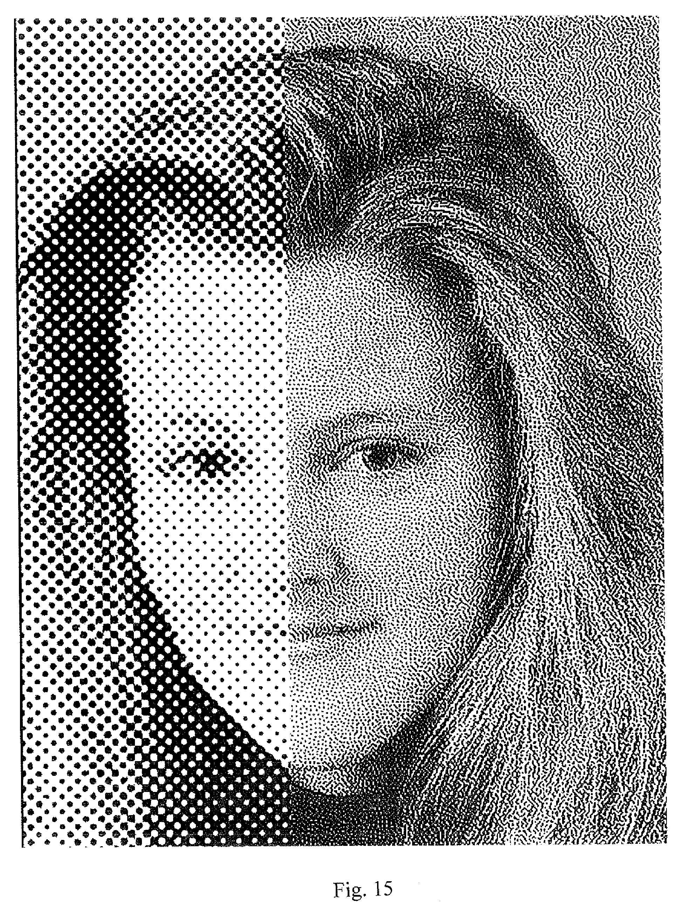

Research in FM-Halftoning has been focused on the task of increasing the amount of pseudo-randomness and the avoidance of visual artefacts. So far, FM-halftoning optimizes the reproduction of every single pixel and does not incorporates any cell structure and therefore also has nor cell boundary effects, nor any systematic repetitions. As the dots in FM do not show a regular, repetitive pattern, no moire-effects can arise no matter if the channel alignment is not perfect. Nevertheless it has to be noted that other disturbing artifacts are known. For example, the strict row-wise propagation of Flayd-Steinberg leads to visual artifacts correlated with the propagation order. These artifacts can only be reduced using more complicated methods like Velvet-Screen (Ugra, see Figure 15). Additionally, in the early 90's the Hilbert-curve is studied in the literature as natural candidate to overcome the problem. However, till this day no common satisfying weighting strategy was found.

Even if the FM method theoretically has the clear advantage of producing images of higher resolution, nowadays, AM halftoning still represents the major part in high volume printing, because with increasing resolution, halftoning becomes hard to control for both AM and FM. This is because any raster technique only reproduces correct values for ideal printers. It is easy to define the luminance of an ideal printing device by just looking at the area coverage. But real life printers show more or less differences in the resulting colour values compared to the originally intended ones.

A first problem of real life printers is that such devices show a limited number of reproducable colours whereas the sum of reproducable colours is called "gamut". The mapping of the original colour tones to the ones physically achievable by a printing device is called gamut-mapping. This is an ongoing research task but there exist good methods retaining the quality of an image while actually enforcing the colours to be in-gamut (See for example J. Giesen, E. Schuberth, K. Simon, P. Zolliker: "Image-Dependent Gamut Mapping as Optimization Problem", IEEE Transactions on Image Processing, Publication Date: Oct. 2007 Volume: 16, Issue: 10 On page(s): 2401-2410). Whereas one of the simplest mappings (called "clipping") simply clips the out-of-gamut-colours to their nearest in-gamut-colour, more sophisticated methods exist which restrict the colour space without retaining the visual experience of the image. This also incorporates tasks like contrast preservation or the removing of halo-effects. The resulting images have been approved to be eye-pleasing using psychovisual tests. The effect of good gamut-mapping is that not only measurements of single colour-patches show continuous characteristics but also the overall appearance of an image remains. Gamut-mapping is needed to retain the visual quality of an image.

Another problem of printing devices is that the visible result of real printers highly depends on an effect known under the term "dotgain" (again, referenced in most common books about halftoning) which includes physical conditions like the printing method, the consistence of the ink, the quality of the paper, the age of the printing device but also environmental conditions like temperature or humidity. These conditions sum up under the term "physical" or "mechanical dotgain". Additionally, dotgain also addresses the effect of light passing the substrate, getting scattered and remitted back to the observer, which is described by the "Yule-Nielsen-Effect" and known under the term "optical dotgain". All dotgain effects introduce a deviation of the originally intended, theoretical colour tone to the actually perceived. The actually perceived colour value is herein understood to be the sum of the intended colour value and a print effect colour value and is called "perception colour value". The intended colour value is the colour value achieved in case of ideal printing conditions and the perception colour value deviates from the intended colour value by the print effect colour value due to non-ideal printing conditions, i.e. due to the deviation between the ideal printer conditions and real printer conditions. The perception colour value results from effects having their origin in the real printing process, like dot-gain, trapping, and slur as well as the particular type of ink composition used (see "The reproduction of colour; R.W.G. Hunt; Wiley; 2004; sixth edition; Chapter 28.14, 28.15).

In the following, dot-gain is discussed as an example for the effects which have an influence on the print effect colour value.

Dotgain highly affects the visual result of a printed product. As an example whereas glossy-paper-magazines can use high resolution prints of 80 l/cm and more, printings on newspaper can nowadays only use resolutions of up to about 50 l/cm for trusted colour reproduction. This resolution is at the boundary of what the human visual system can resolve at normal reading distance and therefore leads to unsatisfying results.

Microscopic observations show that dotgain-effects arise at most at the boundaries of the dots and tendentially are stronger with increasing resolution. As AM clusters together several dots to one bigger cell-dot, the effects only arise at the boundary of this artificial cell-dot which minimizes the dotgain-effect. As with bigger dots, based on the physical conditions, the effects are more stable than with small dots, today, it is possible and common to measure the dotgain of AM-cells and use the gathered luminance-values to preliminary correct the input image causing the printed product again to be of the intended value. As in a dithermatrix, only r*r+1 values can occur, the measurement task is doable. This correction is treated the same way as used in monitor-calibration and therefore is combined together in a so called "destination-profile" which can be used in "Colour-Management-Systems".

Dotgain traditionally is treated as an error which has to be corrected to achieve the originally intended result. This correction is so far done by changing the colour value of the pixels of an image before AM or FM processes are applied. The invention uses a different approach in that the print effect colour value is considered during the error diffusion process (FM process), as is described later. Dotgain usually is described by the percentage of darkness-gain per intended, linear coverage. As the human visual system does not perceives luminance values in a linear way, the actually intended result also describes a dotgain. But these dotgain curves are known and can therefore be defined using well known models (CIELAB-Colourspace, Gamma-Correction).

The dotgain effects of one printing device changes depending on the input image and even more over time, meaning the process of measuring dotgain and correcting it is preferably repeated continuously. In low-cost-printing, an average dotgain is assumed, leading to approximated but feasable results. In high volume printing though, highest quality is needed making it necessary to repeat the correction, but the task to measure and correct bad results is limited or even prohibitive both in time and cost.

In FM, prior art dotgain-corrections do not lead to satisfying results, as in principle, changing the input value of a pixel will have an unpredictable effect on its neighbours. The eventually produced constellation around every single dot introduces another, unknown dotgain. In addition, dotgain-corrections in general compress the value range so that in FM, quantization errors will be propagated slower. As a result, edges become blurred, details and contrast get lost. Summing all up in overall words, colour-management-systems do not ameliorate FM-methods very well.

According to the considerations of the inventor, overlaying an implicit raster cell of the same size as in AM halftoning to every single pixel, one can reproduce up to 2^(r*r) different colour tones in contrast to only r*r+1 values achievable in a dithermatrix. As FM patterns usually do not repeat, one has to consider a sufficiently large surrounding to get an integral measurement of the colour tone reproduced. One can solve this by applying a repetitive pattern of cells representing a small portion of an actual FM-halftoning which produces a suitable approximation of an overall FM-halftoning. This approximation gets more accurate when incorporating more pixels in the surrounding of a middle pixel. All pixels at any distance which belong to this implicitly defined surrounding of a specific middle pixel here are denoted by the "neighbourhood" of that considered middle pixel, constituted of the neighbour-pixels (also just called "neighbours"). But as the combinatorical possibilities of having a neighbour-dot set or not set grow exponentially with the number of neighbours considered, already for a small number of neighbours, it is not doable to measure all combinations. Efforts to invent a model to accurately predict the dotgain for such environments have been made (for example the round dot overlapping model for colour halftones described in the paper of T. N. Pappas: "Model-based halftoning for color images", 1992, or in Shen-ge Wang: "Color calibration for digital halftoning", US Patent 6435654, Publicated 2002) but still are an unresolved research task.

With increasing resolution, AM shows the same problems as FM methods, resulting in increasingly uncontrollable colour differences. There exist hybrid methods trying to combine both methods, AM and FM, some of them are used sparsely in printing industry already. For example, United States Patent 5805734 (1996) describes the use of adjusted screenings depending on the gray level. Some related patents can be found under the term "hybrid halftoning". The existing hybridations used in current printing mostly consist of dots with different sizes arranged like in an FM-method. Mainly, the extreme values near the minimum and maximum values can therefore be reproduced using true FM-halftoning with maximum resolution while in the middle range values, the resolution drops down.

Equally important for the viewers eye than the resolution and the correct colour tone is the steadyness of an image. In AM, sharp edges in contrast to smoothly shaped areas of an image result in a clean look, whereas traditional FM smoothens the edges and introduces noise in gradient areas resulting in a "grainy" look which, in low resolution, is perceived as disturbing noise. Additionally, in most printing methods, with increasing resolution, further problems arise both with AM and FM, for example the clustering of ink along a small vertical range known as "striping". Therefore, FM which uses the maximum resolution is not widely used in high-volume printing despite its clear advantages.

The most desirable printing method would be to produce continuous colour tones per dot which is called intensity modulation or multilevel halftoning. For example printers using thermo-sublimation achieve to melt the dots together with their surrounding. Photo-printers achieve more than two states per dot by combining a number of much smaller ink-drops together to one raster-cell representing the maximal printer resolution. Furthermore in laser printers, a continuous electrostatic signal nowadays leads to better control over printed dots, however this technique still is used only to produce more robust AM rasters.

For an overview of related topics, we refer to the book of K. Simon: "Farbe im Digitalen Publizieren", Springer 2008.

### Summary of the Invention

The object of the invention is to achieve a good printing result although quantized colour tones per dot are used. The aforementioned object is solved by the subject-matter of the independent claims. The dependent claims are directed to embodiments of advantage.

Advantageously, the present invention supplements conventional FM-halftoning processes to improve image quality in printing processes. Thereby the advantages of well known techniques are retained and their drawbacks are avoided or reduced, respectively.

Generally, the present invention is directed to image data processing, in particular to an image data processing method, image processing program or image data processing device. The input image data represent colour values of input colour pixels of an image to be processed. The output of the image data processing according to the present invention are output binary image data which are preferably used to control a printer in order to print the output binary image. The input image data represents an image and may be image data which result from for instance scanning or from a photograph or from the previous processing of an image. The image data processing according to the invention is preferably based on frequency modulated halftoning. In particular an error diffusion process is used which in particular includes a quantization process and an error propagation process which propagates the error induced by the quanization.

The processing is preferably performed input colour pixel by input colour pixel. Each input colour pixel has a particular colour value which, in particular, is not binary but multi-level. The term multi-level is meant to further include not just a multiplicity of colour values of a multiplicity of levels but also continuous colour values for instance represented by real numbers.

If herein the quantization of a colour pixel is mentioned, this implies the quantization of the multi-level colour value of a process pixel. The process pixels may be determined based on the input colour pixels in particular by using an error diffusion process, as will be explained later. By means of the process pixels, the input colour pixels are processed in order to produce output binary pixels having output binary values. The colour value of the input colour pixels and the process pixels may be a one-dimensional colour value or a multi-dimensional colour value. These colour values are multilevel values in the meaning given above. That is, the output binary values have less levels than the input colour values. The output binary values which result from the process are discretized values, in particular binary values. In the following, the term "binary" is used as an example for "discretized". The output binary values may be a set of discretized values (in particular binary values) like a set of binary values as for instance (1,0,1,1,0). The output binary value may be also just one binary value like 1 or 0. If there is just one binary value, the output binary value is called to be a "one-channel" output binary value. In case there are a set of binary values, the output binary value is referred to as a multi-channel output binary value.

The colour values may be represented by coordinates of a colour space like CIELAB or HSV etc.

The colour value may represent a one dimensional value of a scale of one colour. If it is the black colour, the colour value may range from white to black or may represent any grey value in between. Correspondingly, a "grey value" may be assigned to any colour for instance to a magenta colour or cyan colour. On the other hand, a "colour value" may be a colour value of multiple dimensions which colour value represents a particular position in a colour space and may be represented for instance by a CIELAB-value or an RGB-value or even by a spectral description of the colour represented by a multi-dimensional colour value. The multi channel output binary value may be accorded a so called "quantitative theoretical colour value" which is calculated from the set of binary values. Preferably each value of the set of binary values, i.e. each binary value is assigned to one channel of a printer. A calculation of the quantitative theoretical colour value may be based on the Neugebauer model. This quantitative theoretical colour value differs from the perception colour value as will be explained below. The calculation of the quantitative theoretical colour value is not obligatory in accordance with the invention.

In this invention, the colour values of the input image no matter if they are one-dimensional or multi-dimensional may be subjected to an error diffusion process including quantization and error propagation as is known in particular from FM-halftoning.

The result of the error diffusion process is a so-called binary pixel. The binary pixel has a binary colour value, i.e. a quantized colour value which results from the multi-level colour value of the process colour pixel. The binary colour value of a pixel is a binary value with respect to one or more colour channels according to the printer channels of the printing device, i.e. a binary value may be comprised of one binary digit per output channel depicting where to print or not print a dot in the colour of that particular channel. The difference between the perception colour value and the multi-level colour value represents an error which is propagated in the prior art by an error propagation process which is part of the error diffusion process.

According to the invention, the error diffusion process preferably considers effects to be expected due to the real printing process which printing process is based on the binary pixels. In particular, the print effect colour value is considered when processing an input colour pixel in order to produce output binary pixels.

In case of ideal printing the binary pixel would reproduce the desired colour defined by the binary colour value of the binary pixel according to the printer channels. This here is denoted as the quantitative, theoretical colour value of the binary pixel. As real printers are not ideal, the perception colour value according to the invention represents the perception to be expected for a dot when printing the according output binary pixel. According to the invention, the perception colour value not just includes the quantitative theoretical colour value of the binary pixel but at least one additional information which results from the real printing process. This additional information may for instance depend from the real printing device and/or from the error diffusion process used for processing the colour pixels. In particular, the perception colour value may be influenced by dotgain effects and/or by the colour (binary values) of the surrounding dots and/or by the structure of the dots in the surrounding of a dot. This structure is in particular influenced by the error diffusion process. A dot and its surrounding dots may form a dot cell as will be explained later.

The perception colour values represent the colour value expected to be perceived in particular for a middle dot of a dot cell, when perceiving the dots, after printing of the dots has been performed. In other words, the expected printing result has an influence on the error diffusion process. In particular, this influence is considered during the pixelwise processing of the colour pixels by the error diffusion process. Due to this influence in the pixel by pixel process steps, there is in particular an influence of the perception colour value on quantization and/or error propagation. Preferably an input colour value of an input colour pixel and an error propagated to the input colour pixel as well as a perception colour value expected for dots representing the quantized input colour pixels are considered when processing the input colour pixels in accordance with the invention, in order to produce the output binary pixels.

The binary pixels which result from the error diffusion process according to the invention and which represent the print data have binary colour values. "colour values" may have different dimensions in this application. Preferably, the number of colour channels correspond to the number of different inks used for printing. Preferably, a colour value of a process pixel and/or the colour value of a dot cell "comprises" a one-dimensional colour value. The term "comprises" means here that the colour value includes information which corresponds to a one-dimensional colour value or which allows to calculate a one-dimensional colour value. Furthermore, the expression "comprises a one-dimensional colour value" does not exclude that a multi-dimensional colour value is comprised by the colour value. For instance, the one-dimensional colour value is represented by the value of one coordinate while there may be a plurality of coordinates in order to define the colour (for instance three coordinates). In this example, the expression "comprises a one-dimensional colour value" corresponds to "comprises a colour value coefficient". This does not exclude that the colour value may be represented by more than one colour value coefficient.

If for instance, the colour value of a dot cell is based on a luminance measurement of printed dot cell, then the corresponding colour value is just a one-dimensional colour value and corresponds to a grey value. Thus, the colour value of the dot cell comprises the grey value. On the other hand, the colour value of a dot cell may be a multi-dimensional colour value which allows calculation of a luminance value from this multi-dimensional colour value. Thus, the colour value of the dot cell comprises information which allow to calculate a one-dimensional colour value, i.e. a grey value or a luminance value. These two examples are meant to be covered by "comprises".

For processing the input colour pixel, preferably so-called and already mentioned "process pixels" are determined. Process pixels result from the error diffusion process and all process pixels together constitute a process image. In particular, the process image changes during the error diffusion process. This change is due to the error propagation caused by the error diffusion process. Each process pixel is determined based on a particular one of the input colour pixels and based on an error propagated to the location of the particular one of the input colour pixels. In more detail, the colour value of the particular one of the input pixel is added to the error colour value which is propagated to the location of the particular one of the input pixels. The visited pixel is a particular process pixel which is processed in the current step of the error diffusion process. In other words, the process image is an image on which the error diffusion process works and which dynamically changes during the error diffusion process and the visited pixel is that pixel of the process image which is processed in a current step of the error diffusion process wherein preferably each step just considers only one of the process pixels. Thus, in each step preferably just one of the input colour pixels is considered by processing the process pixel, i.e. the visited pixel.

During the error diffusion process, preferably, one input colour pixel after the other is considered by the error diffusion process, i.e. the colour value of the input colour pixel is used for processing it by the error diffusion process. In particular, a so-called visited pixel is determined from the currently considered pixel which has the same location in a process image as the currently considered input colour pixel has in the input colour image and a colour value which is equal to the sum of the colour value of the currently considered input colour pixel and an error colour value which is the colour value of the error propagated to the location of the visited pixel. The total error colour value produced by quantisation of the currently considered pixel is the difference (in colour space) between the colour value of the visited pixel and the perception colour value of a dot of a selected dot cell. The middle dot of the cell represents the (fixed) output binary pixel at the location of the visited pixel and the dots of the dot cell in the neighbourhood of the middle pixel represent the (fixel) output binary pixels at the corresponding locations around the visited pixel. This total error colour value is divided and diffused to other locations in the process image, e.g. by a Floyd-Steinberg algorithm. The total error colour value and the colour value of the visited pixel may be a one or multi-dimensional colour value. According to another embodiment only one dimension of a colour is processed during one error diffusion process. In that case both the total error colour value and the colour value of the visited pixel are represented by multi-dimensional colour values, for instance in the CIELAB space in order to be able to calculate a colour distance (with respect to the perception colour value).

In the error diffusion process, the propagated error is considered for quantization. This consideration may be done by calculating the aforementioned sum and/or by shifting the quantization level in dependence on the error. These two options may be combined. In the following, for reasons of comprehensibility, the first option will be the basis for the further description. Anyway, in both options, the quantization is based on the colour value of the currently considered pixel and the error colour value.

According to the invention an additional third component is a basis for the determination of the binary values of the output binary pixels. This third component depends in particular on the expected perception of printed binary pixels in particular if not just one printed binary pixel is considered but also neighbours of the printed binary pixel. In other words, the third component is preferably based on the aforementioned perception colour value and/or print effect colour value.

According to a preferred embodiment, colour values of dot cells are provided which dot cells respectively represent a composition of printed binary pixels. The colour value of the dot cell in particular is assumed to correspond to the expected perceived colour value (perception colour value) and in particular considers effects of the real printing process, like dotgain effects. In other words, the colour value of the dot cell is preferably the above-mentioned perception colour value expected for a particular dot which corresponds to a printed output binary pixel, in particular in case this particular dot (printed output binary pixel) is part of a particular composition of dots (printed output binary pixels). The particular output binary pixel is preferably the quantized visited pixel. If the particular output binary pixel is printed, this results in the particular printed output binary pixel. In other words, the printed output image consists of dots while the (not-printed) output binary image consists of output binary pixels. The particular output binary pixel has the same location in the output image as the visited pixel has in the process image.

In accordance with the invention, a particular composition of dots is selected in order to achieve an optimum perception colour value for the particular dot which represents the visited pixel. The selection of the composition of dots corresponds to a selection of output binary pixels. How this is performed in accordance with the invention, will be explained later.

The aforementioned dot may be a combination of primary dots. For instance a specific colour channel is assigned to each primary dot. For instance a primary dot consists of just one ink. A dot consisting of a plurality of primary dots is for instance a dot which results from a superposition of dots of different inks. To each primary dot a particular binary value may be assigned. Thus, a set of binary values may be assigned to a dot which consists of a plurality of binary dots. Each binary value is the binary value of a colour channel which represents for instance a ink used for printing. In particular, the set of binary values which represent an output binary value corresponds to the set of binary values which is assigned to a dot consisting of a plurality of primary dots. If the set consists just of one binary value, the binary value of the output pixel preferably corresponds to the binary value assigned to the dot. In case the expression "binary values of dots" is used herein, this covers both cases, i.e. a dot may have just one binary value or a set of binary values.

The candidate dot cells represent possible compositions of printed output binary pixels which may be the result of the method according to the present invention. In other words, the plurality of candidate dot cells represent a plurality of possibilities for compositions of printed output binary pixels. One of the candidate dot cells will be selected during the quantisation.

The dots of the dot cells (e.g. candidate dot cells or selected dot cells) are also called herein "cell dots". The cell dots represent binary values which are called herein "cell binary values". In particular, the cell dots of candidate dot cells represent "cell binary values".

In order to find output binary pixels to be placed at the same location as the non-fixed pixels, the binary values of a selected dot cell at the locations of the non-fixed pixels are used as the binary values of the output binary pixels to be set at the locations of the non-fixed pixels. If for instance only one pixel of the process pixels of the current pixel cell is a non-fixed pixel, for instance the pixel in the lower right corner, then the binary colour value of the non-fixed pixel is equal to the binary colour value of the dot in the lower right corner of the selected dot cell.

In order to perform corrections, locations marked as fixed may be again marked as non-fixed in order to allow a pass of the error diffusion process which in particular considers the output binary values of output binary pixels determined in any previous pass or combination of passes. The changing from "fixed" to non-fixed relates preferably to neighbours to the location of the presently processed pixel. This correction in particular includes the later discussed "structural weighing". A pass means processing all pixels of an image once by using an error diffusion process. The image may be a separated image or an unseparated image, i.e. a complete image.

According to an embodiment of the invention, the input image is separated into different colour dimensions, i.e. the input colour image is separated into a plurality of one-dimensional or multi-dimensional input colour images. Correspondingly, the process pixels may be one-dimensional or multi-dimensional process pixels which have a one-dimensional or multi-dimensional colour value. Preferably, a separate halftoning (quantization) using the error diffusion process as described above is performed for each of the separated colour dimensions (separated images), whereas the processing of all separated input images is denoted as complete halftoning. The separated colour dimensions may be one- or multi-dimensional. In particular, the dots of one and the same candidate dot cell may belong to different colour channels and may be comprised of multiple primary dots of different colour channels. The output binary colour value of the non-fixed pixel is set to be equal to the binary value of the dot within the selected dot cell, in case the dot has only one colour channel or is set to the set of binary values in case the dot is a composite of plural primary dots.

A "separate halftoning" (of a separate image) may comprise one or more passes which are considered to be necessary in order to achieve an output of desired quality. A "complete halftoning" (of a complete image) may comprise a plurality of separate halftonings.

If a specific binary value is set at the location of the non-fixed pixel, then, according to a particular embodiment, the location of the non-fixed pixel is marked to be now "not-allowed" so that a process pixel of a later separate halftoning of a following separated input image, which is at the same location, will not be allowed to be set (fixed) The marking "not'allowed" will be preferably maintained at least until all later considered separated input images have been processed by later separate halftonings. In other words each separate halftoning is assigned to one of the separated input images, all separate halftonings define a complete halftoning.

In order to select the dot cell, i.e. in order to find the selected dot cell, the colour values of a plurality of candidate dot cells are compared with the colour value of the visited pixel. The location of the visited pixel may be equal to or different from locations of the non-fixed pixels. The location of the visited pixel in the process image is equal to the location of the currently considered input colour pixel in the input image. The colour value of the currently considered input colour pixel is the colour value which is input in the error diffusion process. The visited pixel has as a colour value the sum of the colour value of the currently considered pixel and the error colour value. The error colour value is a colour value propagated to the location of the visited pixel due to the error diffusion process. This location corresponds to the location of the currently considered input colour pixel. Out of the plurality of candidate dot cells which represent potential candidates to become a selected dot cell, that dot cell is preferably selected which colour value is closest to the colour value of the visited pixel. According to alternative embodiments, the degree of closeness is just one criterium to select a dot cell and other features of the pixel cell and/or other constrains may have an influence on the selection of the dot cell. These selection procedures may be based on a weighing procedure which is explained in more detail in the detailed description of embodiments. For instance, if three out of plurality of candidate dot cells have the most closest colour value to the colour value of the visited pixel, then those out of the three is selected which has a pattern which is most unlikely to cause artefacts.

In other words, according to a particular embodiment, the selection of the dot cell is not only based on a colour value comparison, but features of the process cell and/or binary cell and/or dot cell may be additionally used for selection. These features may be the pattern of arrangement of the pixels or dots in the cell, their individual colour values or binary values, colour differences between neighbouring pixels or dots of a cell or combinations thereof. Other features are for instance pattern similarity to neighbouring or overlapping cells. Similarity to preferred or non-preferred patterns, smoothness constraints, alignment of axes etc. If the selection is only based on colour value comparison, those dot cells are preferably selected which cause a minimal difference between the colour value of the dot cell and the colour value of the visited pixel.

Preferably, the method according to the invention processes an input image by applying the error diffusion process to a "process image". The process image may change with each step of the error diffusion process and the process pixels of the process image respectively have a colour value which is the sum of the colour value of the input pixel at the same location as the process pixel as well as the error propagated to this location. The pixel cell so far considered herein covers a particular area. The pixel cell is considered to consist of process pixels as far as not defined otherwise herein. As the process pixels of a pixel cell are derived from input colour pixels which are within the area of the pixel cell, it is also said herein that input colour pixels are within the area of a pixel cell or that the currently considered pixel (which is an input colour pixel) is covered by the area of the (currently considered) pixel cell, i.e. the current pixel cell. The currently considered input colour pixel has the same location as the visited pixel. The colour value of the visited pixel is the sum of the colour value of the currently considered pixel (which is an input pixel) and the error propagated to the location of the currently considered pixel. The process image represented by the process pixels is also called herein "error image E" while the input image is called "input image I".

In case the dot cell is selected based on the colour values of the visited pixel and the colour values of the candidate dot cells, this may be performed in different ways. In case the input colour pixel has just one colour dimension (e.g. due to separation of the input colour image into a plurality of one-dimensional input colour images), the colour value is a one-dimensional colour value and may correspond to a grey value. As discussed above, a candidate dot cell may comprise several dots of different colour, i.e. which belong to a different colour channel. In particular, a dot cell has a colour value which has a particular distance to the colour value of the visited pixel. This colour distance may be measured in a colour space as for instance the CIELUV or CIELAB colour space and is called ΔE. See for instance R.W.G. Hunt "The reproduction of colour", sixth edition, 2004, Appendix 5 for colour difference formulae). In accordance with a particular embodiment of the present invention, a one-dimensional input colour image of white and/or black colour is processed in at least one pass of the separate halftonings before other colour channels are processed in other separate halftonings. This case, the setting of white and/or black output binary pixels may be based on a difference in grey value between the grey value of the process pixel and a grey value derived from the colour value of the dot cell. In other words, grey values may be calculated for the different candidate dot cells and these grey values are compared to the grey value of the process pixel in case a black colour and/or white colour channel is concerned. Again, the dot cell is selected so that the difference is preferably as small as possible but also other constrains or features (e.g. of the dot cell) may be considered, as mentioned above.

The error diffusion process may be applied to the input image just once, i.e. in only one pass in order to have a resulting binary image comprising binary colour pixels. According to another embodiment of the invention, the inventive error diffusion process may be applied at least a second time or more times, i.e. in more than one pass in order to finally arrive at a binary colour image. If the error diffusion process of the invention is applied at least one further time, the output binary image which is the binary image which resulted from the previous appliance of the error diffusion process, is preferably used besides the original input image if the error diffusion process is applied at least one further time. In particular, cells of the previous output binary image which resulted from the previous pass of the error diffusion process are used. These cells are called previous binary cells. These previous binary cells are in particular used as a basis for a selection of a dot cell, i.e. as a criterium for this selection. The previous output binary image may result from a processing of one, more or all colour dimensions of an input colour image. Further more the previous output binary image may also result from a previous separate halftoning. The previously applied error diffusion processes may be in accordance with the invention, i.e. may include the selection of a dot cell and/or the consideration of a perception colour value or may be in accordance with error diffusion processes known from the prior art like Floyd-Steinberg process. According to the invention, preferably, the perception colour value is considered at least during one pass of the error diffusion process but not necessarily during all passes. The previous binary cells may be used in particular for the so-called structural weighing as will be discussed later.

According to the invention, an error diffusion process may be applied to the colour pixels of the colour image several times, i.e. several passes of the error diffusion process may be applied. At least one of this applications of an error diffusion process is performed in accordance with the invention, i.e. by determining the binary colour values based on a perception colour value, i.e. in particular based on the colour values of selected dot cells. In other words, there may be several passes of an error diffusion process wherein at least one pass is in accordance with the error diffusion process according to the invention ("inventive error diffusion process"). The inventive error diffusion process may be performed during the first pass, i.e. the inventive error diffusion process does not consider binary pixels determined in a previous error diffusion process. Alternatively, the inventive error diffusion process may be applied after binary pixels have already been determined by a first pass of a known (state of the art) error diffusion process or of the inventive error diffusion process or of a previous separate halftoning. In that case, preferably, the binary pixels determined in at least one of the previous passes are considered when determining the binary colour value of the non-fixed pixels a "pass" results in an output binary image.

According to a later described version of the invention, a first pass of the error diffusion process is performed in accordance with prior art error diffusion processes like Floyd Steinberg. Then at least one further pass is performed in accordance with the inventive error diffusion process.

The central concept is a reduction of the cell size by a sophisticated use of the physical characteristics of the printing device resulting in a higher effective resolution. This reduction is the result of the direct integration of real print effects, like the effective observable dotgain per dot in a raster cell or its neighbourhood, respectively, into a halftoning algorithm. This integration results in accurate pixel-wise colour-tone-reproduction by explicitely using all physical constraints of the printing device instead of trying to correct them in advance as it is done in todays printing industry. Thereby real print effects like dotgain are not treated as correction problem but as some kind of a static intensity modulation (multilevel halftoning) distributed over the dots neighbourhood.

In order to retain the high detail resolution of FM-rasters we incorporate the foregoing insights in some new FM-algorithms. The potential of smaller raster cells is used for innovative strategies of colour image reproduction considering both high and low repetition accuracy of the printing process.

Our method is intended to be used with a printing device that actually has a sufficient amount of dotgain like laser printers. Whereas up to now, these devices are hard to control because of the high amount of dotgain. In our method, more dotgain resolves in smaller errors which simplifies the propagation process in the considered FM-method. The FM-concept is based on an adapted visiting-strategy possibly along a Hilbert-curve together with an adapted propagation as for example in the sense of an edge preserving smoothing filter resulting in images with high detail-preservation and few artifacts. To integrate the dotgain we then consider all candidate dot cells whereas the selection principle is correlated with weighted features of the candidate dot cells as a main feature the structural similarity to the neighbourhood pattern and corresponding colour distances to retain both the smooth halftoning and the gain of colorimetric exactness. The explicit consideration of the surrounding of a pixel also opens up the possibility to add additional image-enhancements like edge-preserving which is important for example in text-rendering.

In the following detailed description, further features of the present invention are disclosed. Features of different embodiments may be combined.
Figure 1 shows an example for an arrangement of pixel cells;
Figure 2 shows another example for an arrangement of pixel cells;
Figure 3 shows a further example of a pixel cell;
Figure 4 shows a further example of a pixel cell;
Figure 5 shows examples of macroscopic perception effects due to microscopic pixel cell filling;
Figure 6 shows a measurement of a plurality of dot cells;
Figure 7 shows an example for Floyd-Steinberg algorithm;
Figure 8 shows an example or Jarres algorithm;
Figure 9 shows a grey image;
Figure 10 shows error reduction weighing;
Figure 11 shows a Hilbert curve visiting strategy;
Figure 12a and 12b show a flowchart for two versions of embodiments of the invention;
Figure 13 shows a processed grey image and artefacts;
Figure 14 shows dividing of an image in super cells;
Figure 15 shows a velvet screen image;

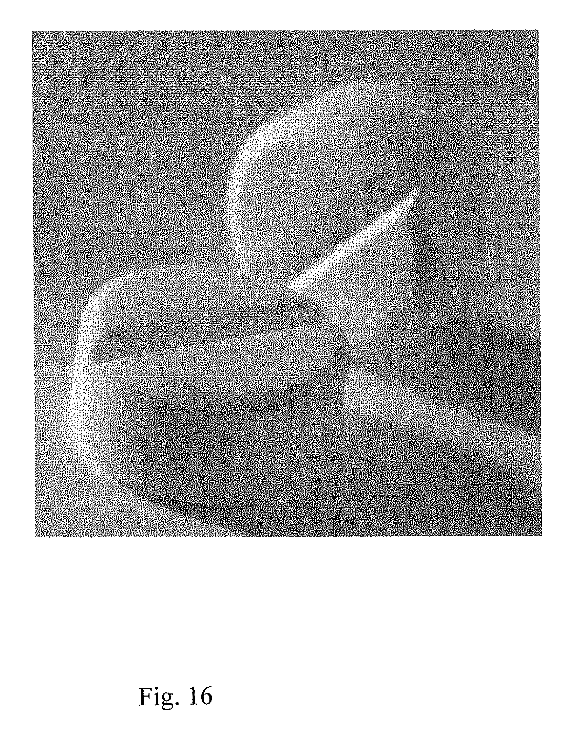

Figure 16 shows a tablette image.

According to an embodiment, 3 parts of processing of image data are defined:
Part 1: The ascertainment of the achievable colour tones by a specific printing device
Part 2: The main algorithm
Part 3: The overall workflow for an arbitrary image.

According to an embodiment, a workflow is provided which transforms input images represented by continuous colour tones using multiple passes to a discretized output image possibly consisting of multiple colour-channels. According to the embodiment, the physical potential of the printing device is used by gathering the achievable colour tones with an appropriate method which is explained below in Part 1. The use of these values requires a specialized software implementation of a RIP (Raster image processor) to transform continuous colour tones to binarized dot masks used for the final representation in the printing device, for example in form of printing plates which is defined in Part 2. The overall workflow is explained in Part 3 consisting of and explained as separated steps, nevertheless the steps themselves may not necessarily be separated. In addition, we define possible solutions for the different steps, whereas some of them are new inventions and part of this patent.

### Part 1: Ascertainment of the reproducable values

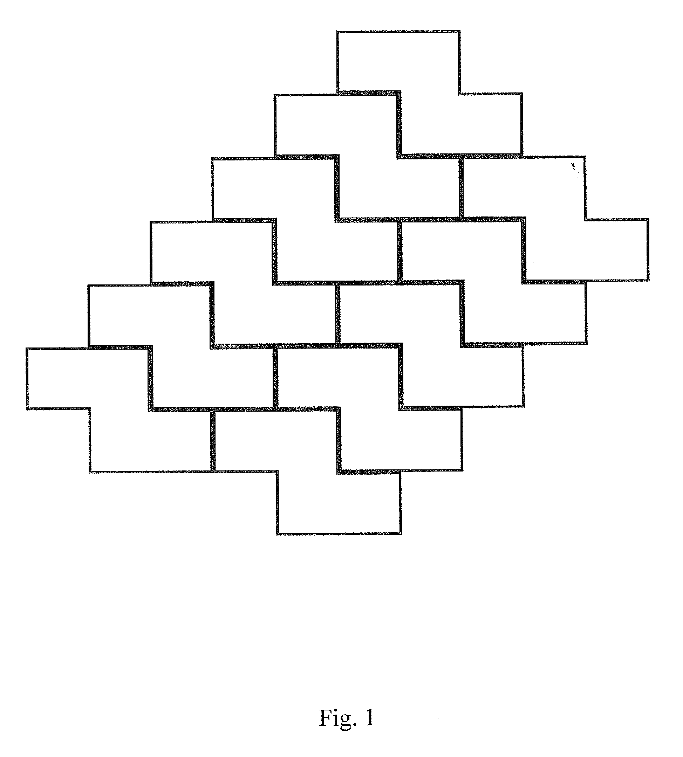

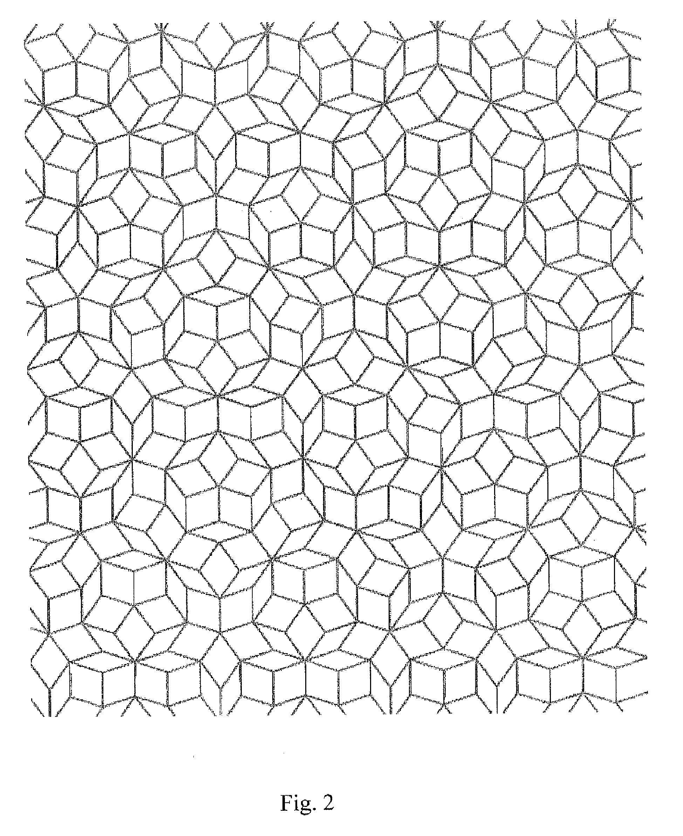

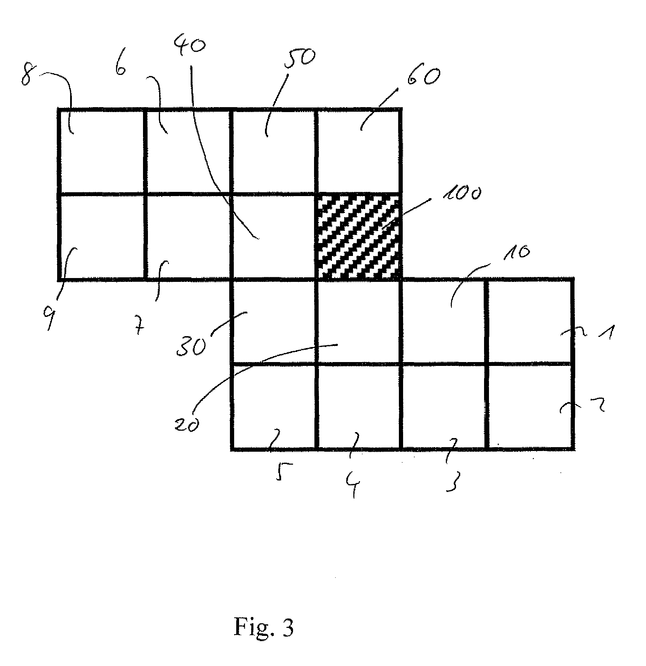

We assume that one pixel represents one dot. We define one or more arbitraty types of cells z. These cells preferably have a shape such that a two-dimensional area could be tiled into such cells without holes. This spatial partition defines a repetitive (Figure 1) or pseudo repetitive (Figure 2) pattern. Every cell-type z defines a "middle" dot (Figure 3, 100), a specific pixel coordinate to which a pixel cell can be overlayed to or, in other words, assigned to. The coordinates of this middle point of the pixel cell will in the following text be stated with (x,y) whereas the other pixels inside the pixel cell are stated with (x',y'). Overlaying such a cell over a pixel of the process image is called "process pixel cell" or short just "process cell". Preferably, to each visited pixel a process cell is assigned. When the error diffusion process proceeds from one visited pixel included in an assigned first process cell to the next visited pixel included in an assigned second process cell, the first and second process cells are preferably overlapping and the second process cell becomes the current process cell. Besides the process cells which consist of process pixels, there are dot cells which preferably have the same shape as the process cells and preferably include the same number of dots as the process cell includes pixels. If therein features of "cell" are described without specifying that it relates to a process cell or dot cell, the feature is described to be valid for both kind of cells if not clear from the context that the feature relates only to one particular kind of cell. The process cell preferably includes more than one pixel, preferably more than 3 or more than 6 pixels. Preferably every process pixel of the process cell has at least one directly neighbouring process pixel of the same process cell. Preferably most (more than 50%) of the process pixel of a process cell have two or more directly neighbouring pixels of the same pixel cell. Preferably, the visited pixel has at least 4 or 5 or 6 directly neighbouring process pixels of the same cell. In Fig. 3, there are 6 directly neighbouring process pixels 10, 20, 30, 40, 50, 60 which are directly neighbouring to the visited pixels 100. The other process pixels 1 to 9 belong to the same process cell. All pixels of the process cell are called "neighbouring pixels" to the visited pixel. The number of pixels in a cell is in particular below 50, while an image has in particular more than 10.000 pixels. The cells of this size are "regular cells", while instead of "regular cells" also "super cells" may be used in the same manner as "regular cells" for the inventive processing. These super cells have a larger size than regular cells as will be discussed later. As far as not specified otherwise herein, the cells (process cells, binary cells and dot cells) refer to regular cells.

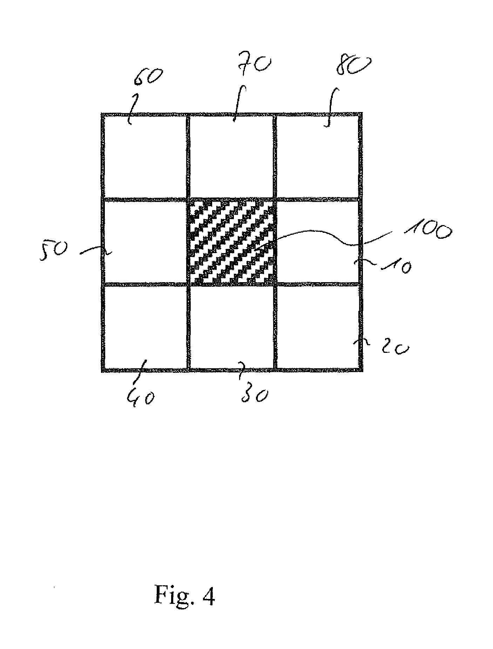

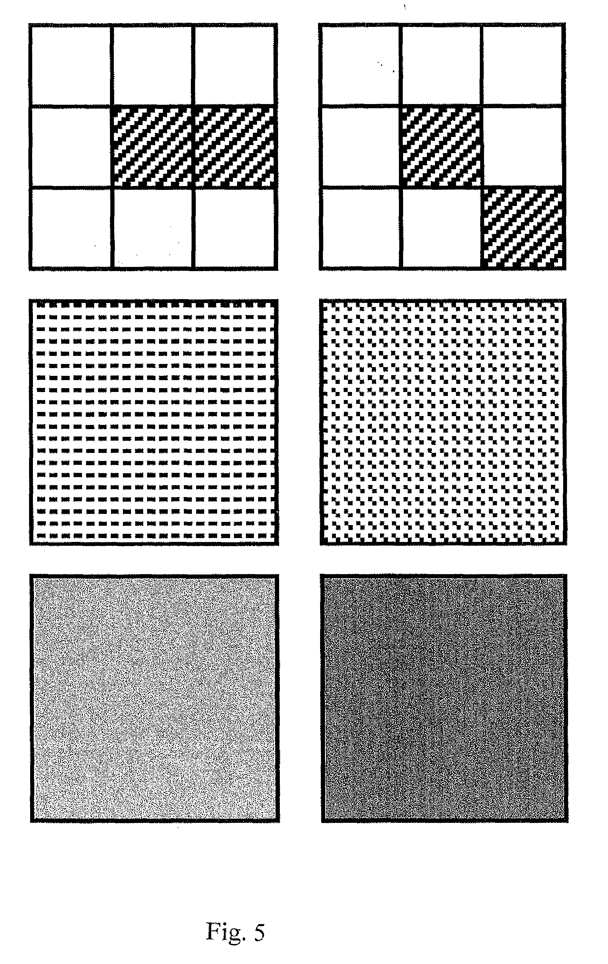

In the rest of this text, we assume the cell z to be quadratic containing r pixels in one dimension which will be denoted by *r*×*r*. That is, for both, the process cells and the dot cells, it will be assumed that they are quadratic in shape. For the example shown in Fig. 4, the visited pixel 100 has 8 directly neighbouring pixels 10, 20, 30, 40, 50, 60, 70, and 80. Theoretically, if for example a 3x3 dot cell (the same shape as in Figure 4) is repeated (Figure 5), the pattern of the repeated dot cells filled with 2 dots of the same colour always at fixed locations in the dot cell has a theoretical area coverage of 2/9. In practice, printing the pattern of the dot cells in high resolution with two different dot-arrangements (dot cells) can show drastical differences. This observation allows us to consider every specific arrangement of dots as a realisation of a specific colour value. In the upper left corner of Figure 5, i.e. the upmost square of the left column of squares, there is a first example for a pattern with two dots with a particular colour. The dots are shown hashed. There is assumed, there are no further dots in the dot cell, i.e. the other dots are "white". The right upper corner shows a second example for the arrangement of two dots in a dot cell. The middle of the left and right column of squares shows a plurality of dot cells arranged one beside the other. The lower left corner and the lower right corner shows the effect on the perception in case of fine printing of a large number of dot cells one besides the other. All examples of the left column in Figure 5 relate to the first example and all examples of the right column in Figure 5 relate to the second example. In the examples, the arrangements of the dots in the dot cell, i.e. their particular locations, have an influence on the perception colour value, i.e. colour value of the dot cell.

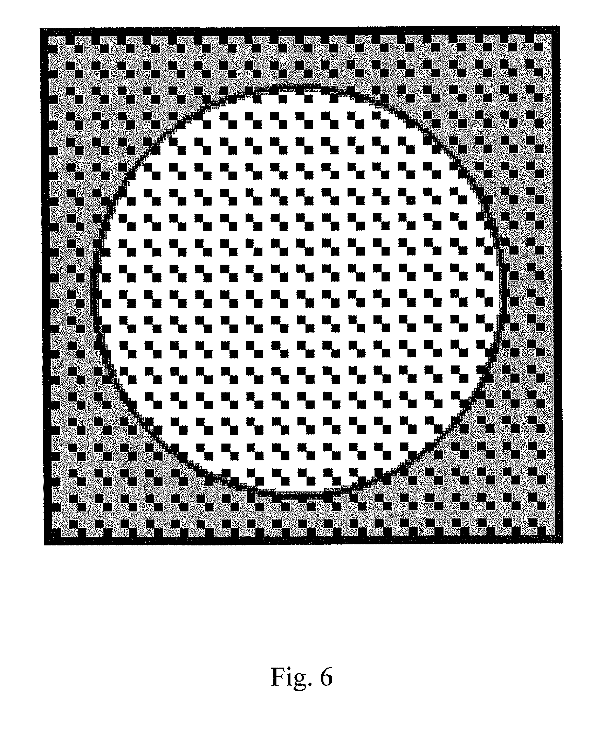

In the research of the inventors, it was found that many of all possible fillings of a dot cell lead to significantly different luminance values in a concrete realization. Thereby, the luminance or colour of a specific dot cell filling can be measured with commercially obtainable photometers as luminance or colour value of the corresponding repetitive or pseudo-repetitive pattern which has the sufficient size of the field of view of the photometer (Figure 6). That is the medium colour value of a respective arrangement of one and the same candidate dot cell is assigned to the candidate dot cell. Fig. 6 shows the measurement of the colour value of a dot cell having the arrangement of the second example in Fig. 5. The luminance is an example for a grey value "comprised" in the colour value of a dot cell. This dot cell may comprise dots of different colour channels. A second way to determine the luminance of the colour values of dot cell-fillings is their simulation with a suitable model (see for example P. Jenny, S. Mourad, T. Stamm, M. Vöge, and K. Simon: "Computing Light Statistics in Heterogeneous Media Based on a Mass Weighted Probability Density Function (PDF) method", JOSA A, Vol. 24, Issue 8, pp. 2206-2219). Both methods can also be combined. This data ascertainment can be viewed as a device characterization. In contrast to colour-management-systems, profiles and direct dotgain-corrections, this is only a possible way to determine a perception colour values which are used to modify the error diffusion process.

In AM-halftoning a 3x3 dot cell filled with either white or black dots, induces only 3*3+1 = 10 different tones. However in FM-halftoning 2^9 = 512 colour values can potentially be observed. Note that this is just an example and the method explicitly allows different shapes, repetitivity and sizes of the cell and even more an arbitrary number of output channels used. We take into account that in principle with this method, one can define all possible fillings of a dot cell using all colour channels but which may be undoable to measure all outcomings because of the large number of possible combinations. Note that, for practical use though it is not necessary to capture all possible patterns. A suitable selection will always be good enough.

Preferably a lookup-table L is or has been created which contains the resulting colorimetric value (colour value) of the considered fillings, for instance, derived from integral colorimetric measurement using a photo-densitometer, recursive construction and/or simulation.

According to a particular embodiment, such a lookup-table L is available in a database without need of creation. In particular different lookup-tables for different types of printers, papers, etc. may be available.

Preferably, the lookup-table includes the colour values of all candidate dot cells, i.e. assigns a colour value to each of the candidate dot cells.

### Part 2: The main halftoning algorithm

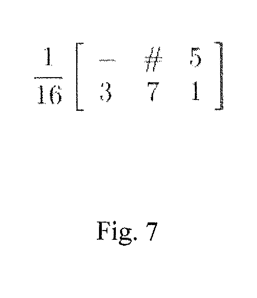

In general, error diffusion (FM) is understood as quantization process where the quantization residual (error) is distributed (propagated) to neighbouring pixels which have not yet been processed (visited), see Kang, Digital Colour Halftoning, Chapter 16. The classical approach of Floyd and Steinberg and variants use a row-oriented strategy for visiting the pixel together with a static matrix of weights (see figure 7, where # denotes the current pixel) to carry forward the error to the neighbours.

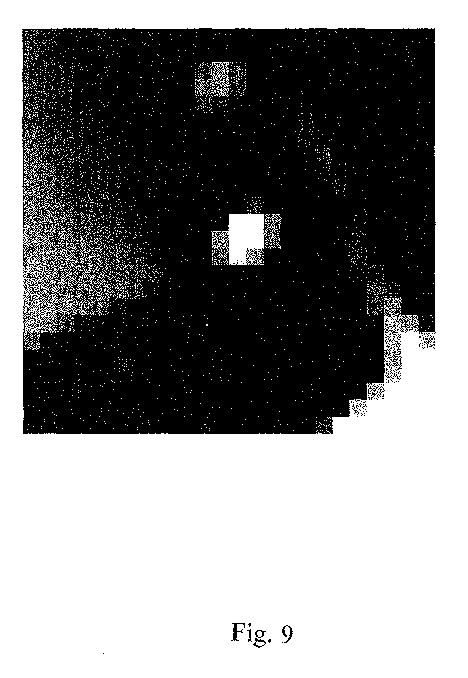

We assume an input image I is given with continuous colour values per pixel at position (x,y), see Figure 9. For simplicity, we present a one-dimensional example with continuous colour values between 0 and 1 although multi-dimensional input images are explicitely allowed. The aim is the creation of an output binary image O (of the same size as the input data I) containing a discretized version of the input image in form of a halftoning with the output binary pixels having values exactly 0 or 1, or a set of these binary values (one binary value per output channel), whereas 0 indicates a an omitted dot and 1 stands for a placed one. Preferably, the dot placement has binary character, i.e. a placed dot corresponds in colour and location to an output binary pixel of the output image. The colour of the output binary pixel is defined by the zero or more colour channel to which the binary pixel assigns a 1. Additionally, we define the process image, which is called in the following "error-Image E" (of the same size and dimension as I) where any residual error will be propagated. image E is initialized with the values of I, the image O which contains the output binary pixels is uninitialized. In the following algorithm, the values in O and E will be changed, whereas the values in I stay the original values.

For every process pixel at location (x, y) in the image, we define a state which declares if the process pixel has already been visited (or non-visited) and if the binary colour value of the output binary pixel, i.e. the corresponding output value O(x,y) has already been fixed (or not fixed). "Fixed" means that a binary value for all output channels have been set at the position (x, y). As base initial condition, all process pixels are marked as "non-visited" and "non-fixed". To the "non-fixed" process pixels correspond allowed output binary pixels, i.e. output binary pixels whose values are allowed to be set. The output binary pixels which correspond to fixed process pixels, are not allowed to be set. Previously fixed process pixels may be changed for a later pass of an error diffusion process to become again non-fixed process pixels. For instance, if all process pixels became fixed pixels by one or more previous passes of an error diffusion process, at least some of them may be changed in that they again become "non-fixed" process pixels. This change of status corresponds to the later described replacement procedure during which at least a part of a cell of previously determined output binary pixels is replaced. This will be described later.

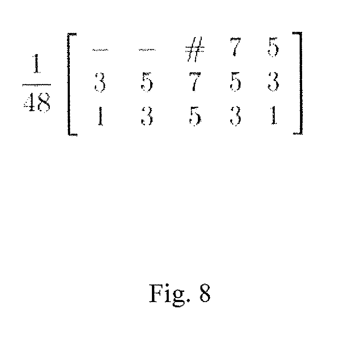

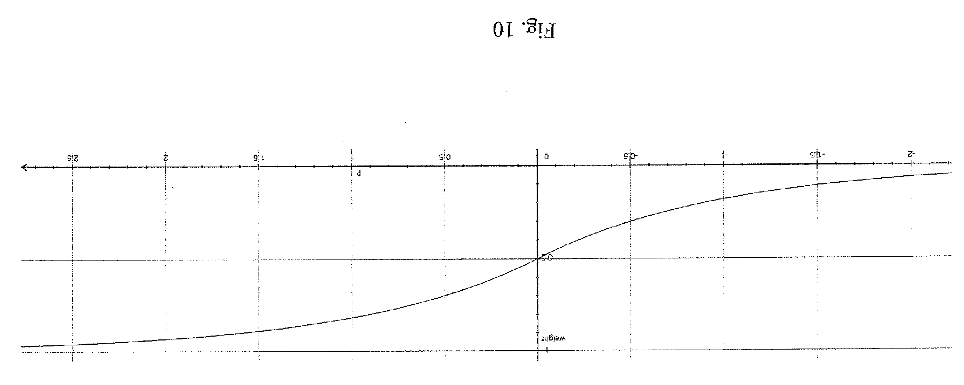

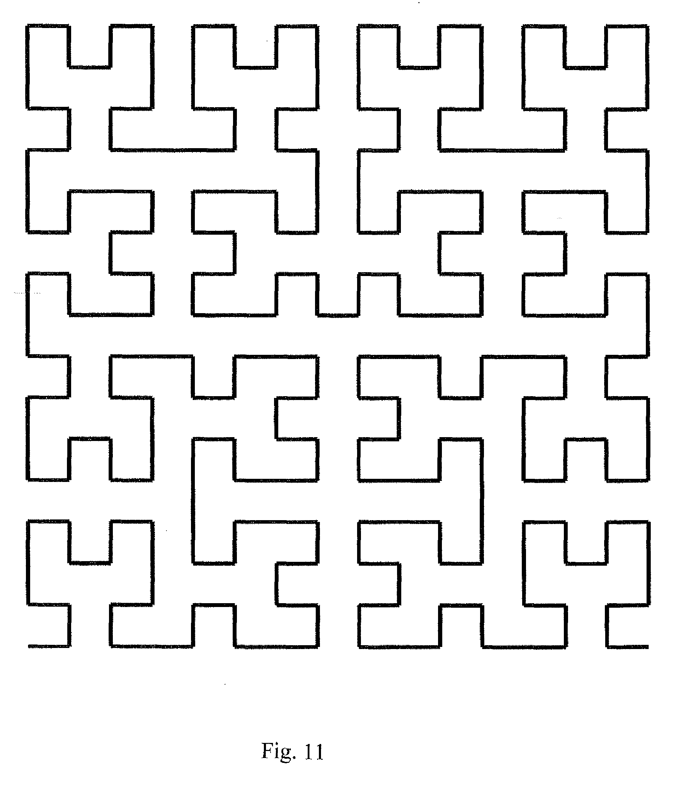

In our specialized error-diffusion process, we distinguish between different methods for a) the quantization, b) the error propagation and c) the visiting strategy, which later will be combined together to adapted algorithms.
a) Quantization: The embodiment considers three kinds of quantization. The first is the classical rounding "E(x,y) < 1/2" which is well known from Floyd-Steinberg. For instance, if the grey value of a process pixel is in the range of 0 to 1, then the corresponding output binary pixel will be 0 if the value of the process pixel is below 0.5 and will be 1 if the value of the process pixel is greater or equal 0.5. The second quantization concept consists in replacement of an existing neighbourhood pattern in O whereas all involved process pixels have been previously marked as "fixed" but for some of them or all of them the mark is now changed to non-fixed in order to allow partial or full replacement. The third method has to be understood as a partial version of the second method, where the neighbourhood pattern around (x,y) contains pixels which have been previously marked as "non-fixed" such that the replacement mutates to a combination of replacement and completion of the cell filling. By this third method an output binary pixel is determined for the previously non-fixed pixels. Furthermore, a replacement of (any number of) the previously fixed pixels is performed, in other words, (any number of) the previously fixed process pixels may be changed to become non-fixed process pixels. Therefore, (any number of) the output binary pixels which were previously determined from the fixed process pixels are now allowed to be replaced by new binary values. In both replacement approaches, a current neighbourhood pattern is given and we are looking for the "best alternative" cell representation among all of them, whereas the cell is an implicitly overlayed cell as explained in Part 1. The second quantization approach is preferably used during the second or later pass of the error diffusion process. The first and third quantization are preferably used during the first pass of an error diffusion process. The first quantization may be a state of the art error diffusion processor.
   The term "best alternative" must be understood as an optimization process related to gathering multiple constraints, where every constraint is realized as weight. The weight of each constraint is between 0 and 1 whereas 1 stands for the ideal value. By multiplying the single weights, one get the overall weight in the range of 0 and 1 whereas again 1 stands for the ideal value. In particular, we define the following weights:
   - Colorimetric weighting: This weight is a function of difference D of the colour value of a candidate dot cell found in the lookup-table L and the the value stored in E(x,y), i.e. the colour value of the visited pixel. The weight can, for instance, be implemented as exp(-D). In context of colour differences, D may be accounted in ΔE.
   - Structural weighting: This weight is a function of the structural difference between the existing neighbourhood pattern in O represented by the fixed pixels which was determined in a previous pass and its currently considered pattern represented by a candidate dot cell of L. This distance may, for example, be defined by exp(-H) where H means the Hamming-distance declaring how many pixels in O must be flipped in order to observe the pattern of the candidate dot cell. A Hamming-distance of 0 therefore stands for an exact match, the patterns are identical. The Hamming-distance represents an example of a feature of output binary pixels determined in a previous pass which output binary pixels may have an influence on the selection of the dot cell.
   - Privilege weighting: This weighting supports the possibility to establish privilege ranking, which can be used to avoid visual unsatisfying artifacts by giving patterns represented by dot cells a low weight which are known to produce unesthetic results. It is possible to exclude specific patterns completely from consideration by weighting them with 0, which restricts the permissible patterns to a suitable selected subset of all possible fillings. The patterns represented by dot cells represent an example of features of the dot cells. The patterns may be classified in different ranks e.g. to be more preferred, medium preferred or less preferred. Depending on the rank, a weight is given to the candidate dot cells.
   When the candidate dot cell with highest weight has been found, this is an example for an optimal dot cell. When the optimal dot cell is found, i.e. when a dot cell has been selected, the output binary pixels of the binary cell overlaid to the current output pixel corresponding to the position of the process pixel are set so that they correspond to the binary values of the selected dot cell. In other words, the binary values of the selected dot cell are preferably written to the current binary cell which is part of the output binary image O. In more detail, the binary values of the binary cell at the particular location of the binary cell have the same value as the binary value in a dot cell at a location which corresponds to this particular location.
   After determining the binary cell, the middle pixel of the current process cell is preferably marked as "visited". The process then proceeds to not yet visited pixels. Process pixels which correspond to output binary pixels which have been set are preferably marked as fixed.
b) Error-Propagation: After a quantization step, the resulting perception colour value of the selected dot cell can be found in L. This value usually differs from the intended colour value for the visited pixel which is stored in E(x,y) by a value which will be denoted by P. FM-halftoning uses error diffusion to compensate this gap which means that the error at the visited pixel is propagated to neighbouring, in particular not yet visited neighbouring process pixels with coordinates (x_n, y_n) by adding parts of the error to the neighbouring values E(x_n, y_n). How this may be done is shown for example in Figures 7 and 8. As a consequence, in general, a value E(x,y) has collected some error from its neighbours, such that it differs more or less from its original value I(x,y). The difference |I(x_n,y_n) - E(x_n,y_n)| is further more denoted by R (for residual).
   Apart from the visiting order of the pixel, the kind of error propagation plays a major rule for achieving good visual results like, for example, the avoidance of artifacts. We use again a weighting approach based on the actual arrangement of the pixels, choosing an optimization function comprising of several addressed goals. In contrast to Floyd-Steinberg and other methods, our weights are not static but an adaption to the current situation of the algorithm. They are similar to edge preserving smoothing filters. Again, we define separate weights in the range from 0 to 1 and combine them by multiplication:
   - Error-Reduction weighting: If the current error P reduces the residual R at position (x_n,y_n) then we set the weight at (x_n,y_n) to a large value. In the opposite case when the distribution of the error P to the specific pixel would increase the residual R at that position, we declare the pixel with a low weight. As an example, we propose the following weighting 1/2*exp(-|P|) for low weights and 1/2 + 1/2*(1 - exp(-|P|)) for large weights, see Figure 10
   - Geometric-distance weighting: Here, the weight is defined as a function of the geometric distance G between the currently regarded pixel at coordinate (x,y) and its neighbour pixel (x_n,y_n). The weight may, for example, be computed with exp(-G). As a distance function, we propose the Euclidian distance or Manhattan distance. Good results have explicitly been achieved with the Manhattan-distance which basically gives pixels a higher weight which are more axis-aligned.
   - If the pixel is marked as already visited, the weight becomes 0.
   The multiplied weights per neighbouring pixel are then normalized so that all weights of all pixels in the cell sum up to 1. For every unvisited neighbour (x_n, y_n), the resulting weight-product is multiplied with the error P and added to the existing value E(x_n,y_n).
c) Visiting-Strategies: The previous steps must be applied to every pixel in the image, we discuss now different strategies to visit all process pixels in an image. A very common method is to visit the process pixels one by one from the upper left to the lower right corner. Another method would be visiting the process pixels randomly, yet another to process the process pixels ordered according to their gradient. For some of the following FM-algorithm, we propose the use of a Hilbert-curve (See figure 11) to go through the image in ordered yet chaotic way. We choose so because the simple upper-left-to-lower-right-method introduces disturbing visible artefacts (well studied for example in Lau, Arce: Modern Digital Halftoning) which in a random setup do not occur. Nonetheless, the random choice would introduce many places where errors cannot be propagated to any surrounding process pixel as the neighbouring process pixels may have all been set, i.e. have been fixed, leaving no possible pixel in the cell where the error could be propagated to. As a compromise, a Hilbert-curve does not introduces as many artifacts and on the other hand allows at many places to propagate the error to the neighbouring non-fixed process pixels. Some artifacts still remain but can be diminished using several techniques like second passes.

As in our specialized method, every process pixel will be overlayed with a process cell, those process cells commonly overlap pixel by pixel. Thus, we incorporate the possibility to overjump specific process pixels using a predefined "stepsize", i.e. not all process pixels are visited during one pass of the inventive error diffusion process. On one hand, this leads to better colour reproduction but, on the other hand, introduces visual artifacts which in the final printing product remain as disturbing noise. To avoid such noise, it is possible to use privilege-weighting to only consider an adapted subset of all possible fillings, i.e. only a subset of candidate dot cells is considered. Preferably, the step size is small enough so that the pixel cells are overlapping. The concepts described above are now used to define two versions of a dotgain-correcting FM-halftoning algorithm.

### 1. Version:

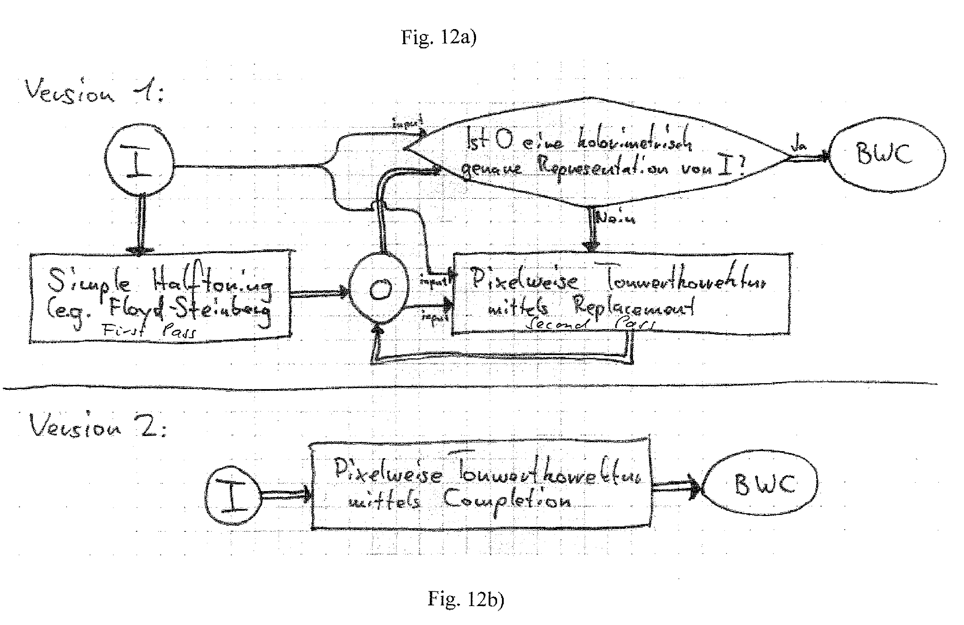

The first version of our algorithm has the goal to create a smooth, detail-preserving halftoning which in one or more proceeding separate passes will be corrected to reproduce colorimetric correct results. The process flow of the 1. Version is schematically shown in Figure 12a).

As a first pass of an error diffusion process, we create a smooth halftoning with few artifacts. The error diffusion process will result in an output binary image O with high visual quality without looking at the colorimetric values. Basically, a simple Floyd-Steinberg or a comparable method would be sufficient. We propose to use a Hilbert curve as visiting strategy together with error-reduction and Geometric-distance weightings described above. The quantization itself is done process pixel-by-process pixel by classical rounding.

This results in the output binary image O corresponding to the input image I which has high visual quality but research has shown that accuracy of colorimetric correct reproduction is not necessarily granted. We therefore reinitialize the error-image E with the original values of I and define one or more proceeding passes through the image O resulting from the previous pass, which changes at least some of the fixed process pixels into non-fixed pixel. For achieving this change, preferably a combination of colorimetric weighting and structural weighting is used (see below). That candidate cell having the highest weight is preferably selected. The selection may result in a replacement of some of the output binary pixels. That is, the replacement procedure corresponds to setting some of the process pixels from the fixed status to the non-fixed status, then performing the replacement of the output binary pixels which correspond to the non-fixed process pixels and thereafter, the process pixels are again set to be fixed. In these subsequent steps, the quantization is organized as replacement. The weighting between the structural and the colorimetric weighting can be chosen arbitrary whereas we propose to use a sufficiently high weighting of the structure. Furthermore, we propose the use of a simple upper-left-to-lower-right visiting strategy or a visiting strategy based on the previously achieved errors at the pixels. The propagation of any error may be chosen similar to the first pass.

As a consequence, the originally created, smooth quantization result will smoothly be corrected for the originally intended colour tone. As the approximation of the first pass is considered to be already good, only a few output binary pixels will be switched from one binary colour value to another. This means that the smooth halftoning of the first pass will mostly be retained, which still results in a nice-looking result. As a further improvement, the second pass may be applied several times with changing weightings for the quantization weights and/or a variation of the stepsize.

### 2. Version:

The 2. Version is shown in Fig. 12b).

The second version of our concept basically integrates the multiple passes of the first version into one pass. We use an arbitrary visiting strategy by quantizing the original grey values using the colorimetric weighting together with the partial replacement mentioned above. In other words, some of the neighbours of the currently processed process pixel (x,y) are already fixed and output binary pixels have been determined for these fixed process pixels in a binary cell. The algorithm is looking for the best completion of the binary cell according to the colorimetric weighting. The error propagation may be chosen to reflect the visiting strategy by defining the geometric-distance weighting accordingly.

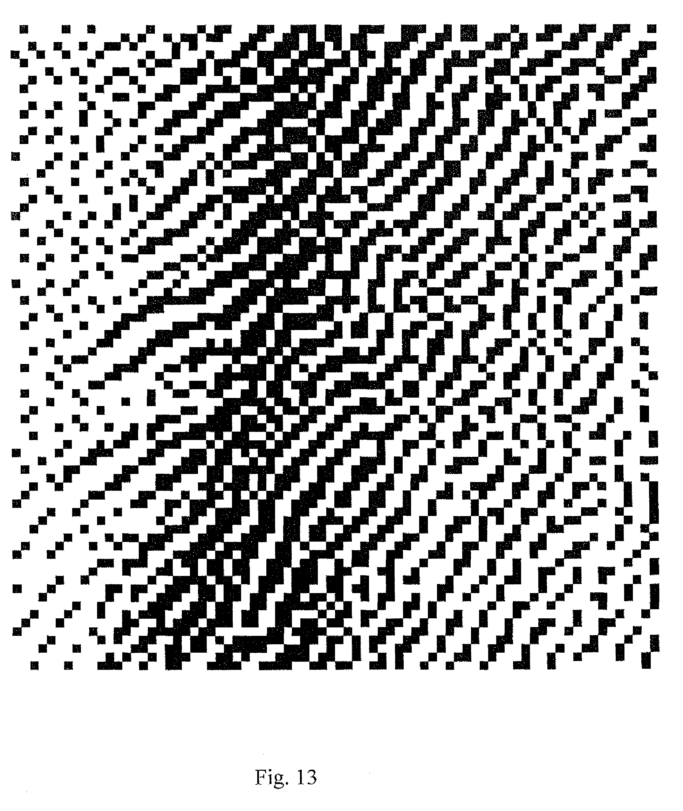

For stepsize 1, in general, only few alternatives can be found to complete the neighbourhood of (x,y). Therefore the propagated error is relatively high in general. Nonetheless, the error propagation produces the intended colour tones very accurately. But research has shown that this may result in an error-oscillation which can be perceived as a kind of AM-line screen (see figure 13). Fig. 13 is a processed image. Because of the error-oscillation, the resolution may reduce against version 1. A greater stepsize introduces more flexibility but may also add noise.

### Part 3: Workflow for a colour image

Transforming an original image to a representation of the image on paper requires several steps where the image data will be manipulated. The invention defines a workflow from the original image to the final data used for the printing plates or drums of a laser printer resulting in a correct, highly resolved colour image reproduction.
Step 1 defines the sampling of an original input image to a representation of Pixels.
Step 2 defines the mapping of the original colour space to the destination-, device-space.
Step 3 defines possible image enhancements.
Step 4 defines the steps to colour halftoning.
Step 5 defines the use of the created halftoning in the printing process.
Step 2 and 3 may be exchanged or even be combined in one, so called "intelligent" gamut mapping.
Step 3 may be combined into Step 4 by using adjusted propagation filters as declared in Part 2.
It is noted that before step 5, the image data is represented by values stored in memory and always may be changed. Step 5 represents the use of this data after "burning" it to a printing plate with the consequence that further changings are impossible.

### Step 1: Sampling

An image in the sense of a perception of a visual system is a reproduction of original physical impulses using continuous values in form of a spectrum. To handle an image (which in further discussion can be seen as a two-dimensional picture like a photograph) in a computer, the impulses have to be sampled at discrete points, often using a cartesian coordinate system and each of the captured impulses must be represented using a discrete number of dimensions (as for example Red-Green-Blue) with discretized numbers (like floating-point values or even integer).

This capturing like it is done in digital photography or with scanners is called sampling which in detail describes the transformation of the continuous impression to a defined set of small image-parts which are known under the term "pixel". Each pixel (which nowadays is often represented by a square but may have arbitrary shape) is located at a specific position (x,y) in the image and reproduces the original impulse using a set of values defining a "colour". This sampling is well-known and studied in signal-processing-theory. Images which have already been captured and transformed to a pixel-image in computers may not have the desired size and resolution and must therefore be resampled using appropriate interpolations.

The step 1 of our invention defines the sampling of an original Image using an appropriate sampling and possible interpolation(s) so that the original Image is represented by a two-dimensional (Note that all methods are explained in two dimensions in space although any number of special dimensions is applicable) cartesian Pixel-Map Io(x,y) with the size and resolution of the desired output-image and a specific number of colour dimensions. As far as not stated otherwise or as not clear from the context herein, the term "dimension" relates to colour dimension and not to spatial dimension. We assume that it is always possible to transfer the continuous colour to a suitable working-space like the XYZ-Space. We note that from there on, it is possible to convert the discrete colour tones to any standardized colourspace derived from XYZ, for example CIELAB, Lch, sRGB and from there on also CMYK, HSV and others. In a colour space like CIELAB, computation of Delta-E-Values is possible.

### Step 2: Gamut-Mapping

The image To contains colours which may not be reproducible using a desired printing device. Whatever method will be applied to those colours, the printer will never achieve the desired colour. Those colours need to be restricted to the gamut boundary of the printing device. To achieve this, many possibilities are known, which all sum up under the term Gamut-Mapping. In this step, the sampled image Io will be transformed into the image I containing only colours inside the destination gamut.

It is stated here that it may be desirable to retain the colour valences of some colours or even colour areas. This must be considered in the gamut mapping. In traditional printing and especially in AM-Printing in connection with ICC-colour-management-systems, this is also the step where the image is corrected for the dotgain of the printing device. In our method, the correction at this state is preferably unwanted.

### Step 3: Image enhancement

We preferably allow at this point the enhancement of the image like using filters for edge-enhancing, noise-reduction or general sharpening. But all the enhancements preferably do not change the overall colour space as explained above and preferably make sure, no final colour will be out-of-gamut after applying.

### Step 4: Colour halftoning

If the input image contains only one colour dimension, then the halftoning can be executed by the algorithms from part 2 without any change. Moreover, this concept can be applied immediately to the traditional FM-realization of colour halftoning where the input image preliminary is separated into a specific set of colour dimensions (for instance CMYK) which are halftoned separately. The drawback of this approach is though that uncontrolled overprints of dots happen which makes it impossible to produce correct colour values pixel-by-pixel. Only an overprint with black may be considered to have a more or less determined result (basically acting as luminance change, hence can be supported as possible simplification which can be applied to all following methods.

In the following, we describe several ways to use our halftoning algorithm from part 2 for a colour halftoning dependent on the accuracy how printer can reproduce a specified dot pattern.

In the following, we divide the original input image into several separated input images which are handled separately and sequentially by a separated halftoning. We will apply our base algorithm of Part 2 to these separated input images in an according way. We explicitly note that for every separated input image, different cells (shape and size) may be considered to accomplish the halftoning algorithm of Part 2.

For the following embodiment, it is preferably assumed that there is no overlapping of adjacent dots during the printing process which preferably is the cause when the printer is able to achieve a high reproduction accuracy. But there may be a superposition of dots. Furthermore, it is assumed that the input image is separated in different colour dimensions, for instance into the basic colours C, M, Y and K. Thus, there is a plurality (4) of separated colour input images. Note that these separated colour images are meant to be a split of the colour gamut of the original input image into separated one-dimensional or multi-dimensional colour-ranges which are comprised in the original colour gamut and are regarded as continuous values. The example of the separated dimensions C, M, Y and K will further more be used as a well-known basic separation model but it is stated here explicitly, that any separation into any number of separated input images is allowed. The separated images are meant to reproduce the original input image when printing them.

Note that, the potential of this last approach can not be exhausted by CMYK colour spaces.

According to a first embodiment, each of this separated colour input images is processed by the inventive error diffusion process separately. This results in separate output binary images. Finally, for the printing process, the plurality of output binary images are superimposed. This may result in that several dots of different colour channel of the output binary images are superimposed at one and the same location. In other words, subtractive colour mixing may occur at these particular locations of superimposition. This colour superimposition happens by chance. According to another embodiment, explained below, such colour mixing is controlled or avoided.

According to another embodiment, one separated input image after the other is processed according to the inventive colour diffusion process. Preferably, a separated black image, i.e. the K-channel is the first image to be processed. The black colour image is quantized by using the invention error diffusion algorithm which results in an output binary image. This output binary image defines where to place the black dot and where not to place it. The next separated input colour image (for instance C) will be quantized by considering the already quantized K-image, i.e. the output binary image resulting from the previous halftoning of the separated black image. This quantization is performed under a condition, i.e. under the condition not to place a C-dot where previously a K-dot has been placed. This means, that a pixel is marked as "not-allowed" where previously, a K-Dot has been set. The same procedure is performed for the other separated input images. That is in case of the magenta channel, an M-dot may only be placed at locations where there is no K-dot and no C-dot. In the same way, said procedure processes a Y-image, where the output binary pixels for the colour channel Y are not allowed at locations which are already occupied by output binary pixels which resulted from the processing of the C-, M- or K-image. The consideration of these already-occupied positions is done by initializing the status of the process-pixels to be fixed, which have been defined to set a dot in the output image in a previous step.

According to the above-described approach, there is no unintended colour mixing at any of the locations of the printed output image. According to a further embodiment, such a mixing is allowed as described in the following. In addition to the previous embodiment, a controlled mixing of colours is allowed which may result in better colour reproduction. For instance, beside the colours C, M, Y, and K, there are three further colours R, G, B which are allowed and which may result from a mixing of the colours C, M, and Y. For instance, red results from a mixing of magenta and yellow, green results from a mixing of cyan and yellow and blue results from a mixing of cyan and magenta.

According to Neugebauer (see reference above), the use of 4 colours (C, M, Y, K) allows 2⁴ = 16 different colours to be generated by mixing. Thus, in case of four printing colours, according to one embodiment, 16 one-dimensional (separated) input images are calculated from the input image and processed separately by using the inventive error diffusion process. As already described above, the placement of output binary pixels is only at locations which are not already occupied by output binary pixels of previously processed other separated input images. According to a further embodiment, not all possible separated input images are generated but only a limited number, for instance 7 one-dimensional colour images are generated from the input colour image, for instance comprising C, M, Y, K, R, G, and B. As above, the 7 separated input images are processed one after the other where a setting of output binary pixels is only allowed at locations which have not been set during processing of a previous separated input image. For instance, at the location of a output binary pixel which has been fixed with a blue dot by processing the blue input image, the printer is controlled to place at this location a superposition of a cyan dot and magenta dot.

According to a further embodiment, additional effects are considered which are beyond the mixture of colours according to Neugebauer. There may be a mutual influence of the inks on each other due to the mixture or due to printing the inks one beside the other. This may have an influence on the perceived colour value. In order to consider mutual influences at least of a subgroup of the generated colours, the separated input images may be combined in order to generate an additional input image which is processed separately and which considers the effects generated by the mutual influences of the combined colour channels.
According to one embodiment, all separated colour images are combined. In the example given above, this means a combination of 7 separated input images in order to generate one particular input image in this case describing the "colorness" of the input image. The value of this new combined image describes the coverage of the area with ink. In more detail, a value of 0 means no colour (white) and a value of 1 means (fully saturated) with colour (i.e. black, red, violet or brown, etc.).
The colour coverage may be calculated by using the Neugebauer model. As mentioned above, the degree of coverage may also be prescribed by using the lightness or chromaticity value of the LCH (L=lightness, C=chromaticity, H=hue) colour space.

According to another embodiment, one additional channel is a "white" channel. This white channel describes the location where there will be no colour, i.e. no ink. The white channel may be determined from the Neugebauer model (see for instance R.W.G. Hunt, "The reproduction of colour" 6 addition, Wiley, Chapter 26.7). As mentioned above, the input colour image is separated in a plurality of images related to different dimensions. One of these images is related to the white-dimension. The pixels of this white-dimension are subjected to an error diffusion process, in particular to an error diffusion process according to the prior art or according to the invention. The result of the error diffusion process is a binary image which represents a binary version of the separated white input image. This white binary image may be used as a mask in order to define where it is allowed to place a dot and where it is not allowed to place a dot. In other words, those locations in the white image which are white, will be blocked for setting output binary pixels when processing the other separated images of the other colour dimensions. These other colour dimensions may be processed one after the other as described above. However, according to a preferred embodiment, all remaining colour dimensions will be combined to a single input image which describes the "colourness" of the remaining dots not blocked by the previous processing by the white image. In the above given example of 16 separated input images, there are 15 images remaining. The 16 images resulted from the 16 possible mixtures of the colours C, M, Y and K according to Neugebauer. This combined colour image which describes the "colourness" is the input for a further separated halftoning. This error diffusion process is preferably the inventive error diffusion process and considers in particular the perception colour value, i.e. the colour values of the candidate dot cells. Furthermore, this process considers additionally the condition, that output binary pixels may only be set on locations which are not blocked by the previous processing of the white channel. This process relies in particular on the calculation of a colour difference between the colour described by the "colourness" image and the colour value of the candidate dot cells. For instance, the above described colorimetric weighing is used and a colour difference like ΔE is determined. For printing of a dot, different colours (like yellow and cyan) may be combined to produce one dot.
A projection of a color to a grey level can be regarded as an approximation of the final ink coverage. If the input image already is given in separated channels, a simple approach would be to take the sum or the average of all channels or a derived function of them. Another idea is the consideration of the saturation-value of the input colour space which may be defined using a transformation to the HSV-Space or by using the chromaticity-value of the Lch-Space. This showed good results together with a treatment of the black channel as V- or L*-value (in HSV or Lch space respectively) separated from the CMY-Channels. The black channel usually mainly adds up darkness to an image and does not necessarily introduces colour shifts which makes it possible to even overlay a black image more or less randomly to a colour-image. Note that the black channel is the main component for the image-sharpness, and therefore an early consideration of the black component is favourable.
According to a further embodiment, other dimensions may be combined and/or processed separately. For instance, the black colour may be separated from all colours. In the above given example this results in that there is a white input image, a black input image and a combined input image which results from the combination of 14 separated images. The black, white and combined images are examples for partial input colour images to be processed. Preferably, the white image and the black image are processed before the combined image. In particular, the processing of the black and the combined image is performed according to the inventive error diffusion process, while the processing of the white image may use prior art error diffusion processes. In particular, there the condition may be set that the processing of the combined image may not place binary pixels on location where the previous processes (i.e. previous passes) have already set binary pixels. The advantage of processing the black image separately is that this image is mainly responsible for the sharpness of the image. Thus, a good sharpness result may be achieved. Other conditions may be implied on the process image like mixing not more than a defined number of inks at the location of one dot, for instance not more than two inks of basic colour of the printing device. Another example is that for instance a colour which may be represented by a combination of inks, like brilliant black is preferred and processed in a separate pass. The brilliant black is a mixture of black and one of the basic colours (for instance cyan).

If the accuracy of the printer to reproduce a specific colour pattern is low like in connection with offset printing, then typically the multiple colour layers will be randomly displaced against each other. However, the accuracy related to one single colour grid is normally as high as in the cases considered previously. In this scenario we suggest the following approach:
According to another embodiment, the first and second separated halftoning processes the white channel and the black channel in accordance with the inventive error diffusion process, i.e. by considering the colour value of candidate dot cells.
According to another embodiment which may be in particular combined with the two aforementioned embodiments, the remaining colour dimensions will be handled with the inventive error propagation algorithm using preferably bigger process cells, which here are called "super' process-cells" and after defining the location for the white and black output binary pixels, the remaining pixels of the super binary cell become output binary pixels of an output binary value corresponding to the separated colour image. As described above, candidate super dot cells require a possible large amount of measuring tasks to fill the lookup-table L. Therefore, a computational model to predict the resulting perception colour value of a super-dot-cell is preferred. Furthermore, based on the perception colour value, a super dot cell is selected out of candidate super dot cells in accordance with the invention.

The partition of a super binary cell is intended to be in such kind that the separate colours are of clustered shape. As research has shown, it is preferable to fill the super binary cells with a regular structure, speaking for example from upper left to lower right or subdividing a super binary cell into boxes each containing just one colour. This supports the physical possibilities of a printing device and therefore reduces the amount of possibly overlapping dots.

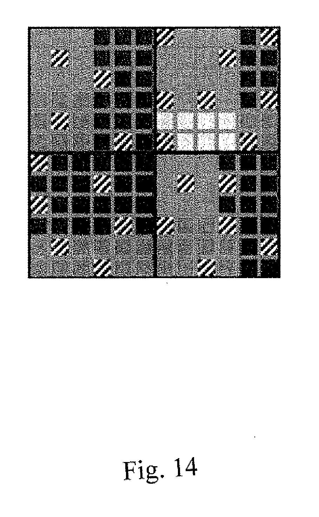

Preferably, the super binary cell is subdivided in boxes wherein each box is assigned one of the colour channels (for instance cyan). No colour output binary pixels are assigned to those locations where previously a white binary pixel or a black binary pixel has been set. In this respect please see Figure 14, where the not-allowed pixels are shown hashed. Since the printed colour binary pixels of a super binary cell are of clustered shape and preferably one besides the other, the colour mixing is tendentially additive and the resulting colour of the super dot cell may be calculated with an additive model like Neugebauer accordingly. The colour of the binary pixels of the super binary cells are determined so that the calculated colour is as close as possible to the average colour value of the corresponding super process cell. The terms "process pixel cell", "dot cell" and "binary cell" mentioned in the claims, respectively not just cover the "regular" "process pixel cell", "dot cell" and "binary cell" but also cover respectively the "super process cell", "super dot cell" and "super binary cell" as mentioned above.

### Step 5: Use of the resulting channel masks

The binary output image resulting from the previous step defube the rasters of the channels and are then used as input for the printing device both for high-volume printing devices and non-impact printing devices. At this state, no further corrections to local colour values can be made. The only thing that still is possible is to adjust the overall impression of the printing by adjusting the printing device, its ink, the paper and other related conditions.

## Claims

1. Image data processing method for processing input image data representing input colour pixels of an input colour image to be printed
wherein the image data processing method uses an error diffusion process in order to produce an output binary image data which represent an output binary image which represents a processed binary version of the input colour image,
process pixels are determined by the error diffusion process, which process pixels constitute a process image and which respectively have a process colour value which is the sum of the colour value of the respective input colour pixel and an error colour value propagated to the location of the respective input colour pixel by the error diffusion process,
wherein the error diffusion process uses the process pixels in order to process the input colour pixels step by step in at least one pass;
wherein the process pixel determined from that one of the input colour pixels which is processed in a current one of the steps is a visited pixel,
**characterised in that** the following is performed in the current step:
a) a process pixel cell is determined which includes the visited pixel and further process pixels,
b) at least one non-fixed pixel of the process pixel cell is determined for which at least one output binary pixel is allowed to be determined by quantization, the at least one allowed output binary pixel having the same location in the output binary image as has the at least one non-fixed pixel in the process image constituted by the process pixels,
c) the process colour value of the visited pixel is compared to the colour values of candidate dot cells or values derived from these colour values, the candidate dot cells consisting of cell dots, the cell dots respectively representing cell binary values, the candidate dot cells respectively representing a candidate composition of printed binary pixels and respectively having the same size as the process pixel cell,
d) a selection of a dot cell out of the candidate dot cells is performed based on the comparison,
e) wherein a output binary value of the at least one allowed output binary pixel is determined to become equal to the cell binary value of the at least one cell dot of the selected dot cell which has the same location in the selected dot cell as has the at least one non-fixed pixel in the process pixel cell.

2. Image data processing method according to claim 1, wherein a selected dot cell has to satisfy the condition that the output binary values of the fixed pixels are respectively identical to the cell binary values of the cell dots of the selected dot cell which have the same location in the dot cell as have the fixed pixel in the process pixel cell.

3. Image data processing method according to any of preceding claims,
wherein the selection of the dot cell is based on a distance between the process colour values of the visited pixel and the colour values of the candidate dot cells in a colour space.

4. Image data processing method according to any of preceding claims,
wherein, in case the colour pixels have been subjected to a previous error diffusion process before currently applying the error diffusion process of the current pass, then the selection of the dot cell is additionally based on previous binary pixels of a previous binary cell,
wherein the previous binary cell comprises previous binary pixels of a previous binary image consisting of the previous binary pixels,
wherein the previous binary pixels are output binary pixels which resulted from the previous error diffusion process.

5. Image data processing method according to claim 4,
wherein the selection of the dot cell is based on the number of binary values of the previous binary pixels of the previous binary cell to be changed in order to comply in value and location with the cell binary values of the cell dots of the candidate dot cells.

6. Image data processing method according to claim 5, wherein at least the number of binary values to be changed and a difference in a colour value of the respective candidate dot cells and the visited pixels are weighed for ranking the candidate dot cells and that dot cell among the candidate dot cells is selected which has the highest rank.

7. Image data processing method according to any of preceding claims,
wherein the selection of the dot cell is further based on ranks which represent the preference given to the pattern represented by the candidate dot cells.

8. Image data processing according to any of the preceding claims, wherein the input colour image is a multi-dimensional input colour image which is separated into a plurality of partial input colour images which respectively represent one or more colour dimensions of the input colour image,
wherein one separate halftoning the error diffusion process is applied for each of the partial colour images separately.

9. Image data processing method according to claim 8, wherein only output binary pixels with specific output binary values determined in a previous separated halftoning are allowed to be determined in a current separated halftoning and a single output binary image is finally produced by the complete halftoning; or
wherein a plurality of separate output binary images are produced in the separate halftonings, which separated output binary images are intended for a superimposition printing.

10. Program which when running on a computer or loaded in a computer causes the computer to perform the method as claimed in any of preceding claims.

11. Data storage medium which stores the program of claim 10 or signal wave which carries information representing the program of claim 10.

12. Printing system including
a printer,
a data processing system in which the program of claim 10 is stored, loaded or running, said data processing system including an interface for inputting the input image data and an interface for outputting the output binary image data to the printer,
the printer being constituted to print the one or more output binary images based on the output binary image data.

## Amended claims

### Amended claims in accordance with Rule 137(2) EPC.

**1.** Image data processing method for processing input image data representing input pixels called input colour pixels of an input colour image to be printed
wherein the image data processing method uses an error diffusion process in order to produce an output binary image data which represent an output binary image which represents a processed binary version of the input colour image, the output binary image consisting of output binary pixels,
process pixels are determined by the error diffusion process based on the input pixels, which process pixels constitute a process image and which respectively have a process colour value which is the sum of the colour value of the respective input colour pixel and an error colour value which is the colour value of an error propagated to the location of the respective input colour pixel by the error diffusion process,
wherein the error diffusion process uses the process pixels in order to process the input colour pixels step by step in at least one pass in order to produce the output binary pixels;
wherein the process pixel determined from that one of the input colour pixels which is processed in a current one of the steps is a visited pixel,
**characterised in that** the following is performed in the current step:
a) a process pixel cell is determined which includes the visited pixel (100) and further process pixels (10, 20, 30, 40, 50, 60, 70, and 80),
b) at least one pixel of the process pixel cell is determined for which at least one output binary pixel is allowed to be determined by quantization, the at least one determined pixel being called at least one non-fixed pixel and the at least one allowed output binary pixel having the same location in the output binary image as has the at least one non-fixed pixel in the process image constituted by the process pixels,
c) the process colour value of the visited pixel (100) is compared to the colour values of candidate dot cells or values derived from these colour values, the candidate dot cells consisting of dots called cell dots, the cell dots respectively representing binary values called cell binary values, the candidate dot cells respectively representing a candidate composition of printed output binary pixels and respectively having the same size as the process pixel cell,
d) a selection of a dot cell out of the candidate dot cells is performed based on the comparison, the dot cell representing a composition of printed output binary values,
e) wherein an output binary value of the at least one allowed output binary pixel is determined to become equal to the cell binary value of the at least one cell dot of the selected dot cell which has the same location in the selected dot cell as has the at least one non-fixed pixel in the process pixel cell.

**2.** Image data processing method according to claim 1, wherein a selected dot cell has to satisfy the condition that the output binary values of the fixed pixels are respectively identical to the cell binary values of the cell dots of the selected dot cell which have the same location in the dot cell as have the fixed pixel in the process pixel cell.

**3.** Image data processing method according to any of preceding claims,
wherein the selection of the dot cell is based on a distance between the process colour values of the visited pixel and the colour values of the candidate dot cells in a colour space.

**4.** Image data processing method according to any of preceding claims,
wherein, in case the colour pixels have been subjected to a previous error diffusion process before currently applying the error diffusion process of the current pass, then the selection of the dot cell is additionally based on previous binary pixels of a previous binary cell,
wherein the previous binary cell comprises previous binary pixels of a previous binary image consisting of the previous binary pixels,
wherein the previous binary pixels are output binary pixels which resulted from the previous error diffusion process.

**5.** Image data processing method according to claim 4,
wherein the selection of the dot cell is based on the number of binary values of the previous binary pixels of the previous binary cell to be changed in order to comply in value and location with the cell binary values of the cell dots of the candidate dot cells.

**6.** Image data processing method according to claim 5, wherein at least the number of binary values to be changed and a difference in a colour value of the respective candidate dot cells and the visited pixels are weighed for ranking the candidate dot cells and that dot cell among the candidate dot cells is selected which has the highest rank.

**7.** Image data processing method according to any of preceding claims,
wherein the selection of the dot cell is further based on ranks which represent the preference given to the pattern represented by the candidate dot cells.

**8.** Image data processing according to any of the preceding claims, wherein the input colour image is a multi-dimensional input colour image which is separated into a plurality of partial input colour images which respectively represent one or more colour dimensions of the input colour image,
wherein one separate halftoning the error diffusion process is applied for each of the partial colour images separately.

**9.** Image data processing method according to claim 8, wherein only output binary pixels with specific output binary values determined in a previous separated halftoning are allowed to be determined in a current separated halftoning and a single output binary image is fmally produced by the complete halftoning; or
wherein a plurality of separate output binary images are produced in the separate halftonings, which separated output binary images are intended for a superimposition printing.

**10.** Program which when running on a computer or loaded in a computer causes the computer to perform the method as claimed in any of preceding claims.

**11.** Data storage medium which stores the program of claim 10 or signal wave which carries information representing the program of claim 10.

**12.** Printing system including
a printer,
a data processing system in which the program of claim 10 is stored, loaded or running, said data processing system including an interface for inputting the input image data and an interface for outputting the output binary image data to the printer,
the printer being constituted to print the one or more output binary images based on the output binary image data.
